# EUROPEAN PATENT APPLICATION

(11) **EP 4 742 608 A1**
(43) Date of publication of application: **13.05.2026**
(21) Application number: 24844798.9
(22) Date of filing: 24.07.2024
(51) Int. Cl.: H04L 41/0803

(54) **CLOUD SERVICE PROVIDING METHOD AND APPARATUS**

(30) Priority: 25.07.2023 CN 202310919132; 19.09.2023 CN 202311216928
(71) Applicant: Huawei Cloud Computing Technologies Co., Ltd., Guiyang, Guizhou, 550025 (CN)
(72) Inventor: FU, Meng, Guiyang, Guizhou 550025 (CN); YANG, Xuwei, Guiyang, Guizhou 550025 (CN); GAO, Zhonghua, Guiyang, Guizhou 550025 (CN); ZHAO, Haifei, Guiyang, Guizhou 550025 (CN); YANG, Yongqiang, Guiyang, Guizhou 550025 (CN); ZHU, Xiaoping, Guiyang, Guizhou 550025 (CN); PAN, Chen, Guiyang, Guizhou 550025 (CN)
(74) Representative: Goddar, Heinz J.
(86) International application number: PCT/CN2024/107234
(87) International publication number: WO 2025/021107

(57) **Abstract**

This application belongs to the field of cloud service technologies, and discloses a cloud service providing method and an apparatus. The method includes: A cloud platform provides a network configuration interface for a user, where the network configuration interface prompts the user to enter network feature information, and the network feature information indicates a cloud service network needed for implementing a target cloud service. The cloud platform provides a network association interface for the user, where the network association interface prompts the user to enter association information, the association information indicates a plurality of service nodes associated with the cloud service network, the service node is used to deploy an application of the user, the application is used to implement the target cloud service, and the plurality of service nodes are deployed based on a resource in one or more resource deployment regions. The cloud platform establishes an association relationship between the plurality of service nodes based on the network feature information and the association information, to obtain the cloud service network. In this application, performance of a cloud service provided by the cloud service network is enhanced.

## Description

This application claims priorities to Chinese Patent Application No. 202310919132.3, filed on July 25, 2023 and entitled "CLOUD SERVICE-BASED NETWORK SYSTEM", and to Chinese Patent Application No. 202311216928.9, filed on September 19, 2023 and entitled "CLOUD SERVICE PROVIDING METHOD AND APPARATUS", both of which are incorporated herein by reference in their entireties.

### TECHNICAL FIELD

This application relates to the field of cloud service technologies, and in particular, to a cloud service providing method and an apparatus.

### BACKGROUND

With the continuous development of information technologies, especially the progress of internet technologies, more and more users such as enterprises and organizations (also referred to as tenants or cloud tenants) use cloud services to implement services.

Currently, before a user uses a cloud service, developers of the cloud service need to create various network objects based on a requirement of the user for the cloud service by using various resources provided by a cloud platform, and performs related configuration on the network objects, to establish, on the cloud platform, a cloud service network for implementing the cloud service needed by the user.

However, currently, deployment of the cloud service network is subject to various restrictions, affecting performance of the cloud service provided by the cloud service network.

### SUMMARY

This application provides a cloud service providing method and an apparatus. In this application, performance of a cloud service provided by a cloud service network is enhanced. The technical solutions provided in this application are as follows.

According to a first aspect, this application provides a cloud service providing method. The method is applied to a cloud platform. The method includes: A cloud platform provides a network configuration interface for a user, where the network configuration interface prompts the user to enter network feature information, and the network feature information indicates a cloud service network needed for implementing a target cloud service. The cloud platform provides a network association interface for the user, where the network association interface prompts the user to enter association information, the association information indicates a plurality of service nodes associated with the cloud service network, the service node is used to deploy an application of the user, the application is used to implement the target cloud service, and the plurality of service nodes are deployed based on a resource in one or more resource deployment regions. The cloud platform establishes an association relationship between the plurality of service nodes based on the network feature information and the association information, to obtain the cloud service network.

In the cloud service providing method provided in this application, because the plurality of service nodes in the cloud service network are deployed based on the resource in the one or more resource deployment regions, the cloud service network is not limited to being deployed based on a resource in a specific resource deployment region. The cloud service network may be considered as a global network, and can provide a service for the user by using resources deployed in the plurality of resource deployment regions. This expands a range for the cloud service network to provide a cloud service, and enhances performance of the cloud service provided by the cloud service network.

In an implementation, the plurality of service nodes meet one or both of the following: The plurality of service nodes are deployed based on cloud resources in different cloud resource deployment regions on the cloud platform; and the plurality of service nodes are deployed based on at least two of a public network resource, a cloud resource in a cloud resource deployment region, and a self-owned resource of the user.

Further, for any service node, the service node is optionally deployed based on a resource in one or more resource deployment regions. For example, the service node meets one or both of the following: The service node is deployed based on cloud resources in different cloud resource deployment regions on the cloud platform; and the service node is deployed based on at least two of a public network resource, a cloud resource in a cloud resource deployment region, and a self-owned resource of the user. In this case, because the service node is not limited to being deployed based on a resource in a specific resource deployment region, it can be learned that the service node can provide a service for the user by using the resources deployed in the plurality of resource deployment regions, and the service node may be considered as a global service node.

Optionally, different listening protocols are used for the plurality of service nodes. When different listening protocols are used for the plurality of service nodes in the cloud service network, the cloud service network can support access to applications for which different listening protocols are used, for example, support services that use a layer 4 network and a layer 7 network. This enhances diversity of cloud services provided by the cloud service network.

In an implementation, different network protocols can also be used for a plurality of first resource sets used to deploy the service node. In this case, the service node can support access using different network protocols, for example, access between IPv4 and IPv6.

Further, different network protocols are used for a plurality of first resource sets used to deploy the plurality of service nodes. In this case, the cloud service network can support access using different network protocols, for example, access between IPv4 and IPv6.

In an optional implementation, the method further includes: The cloud platform deploys a service agent for the service node, where the service agent is used to: when different network protocols are used for the service node and a transit network in the cloud service network, translate a destination address and a source address of a packet transmitted between the service node and the transit network into addresses that comply with a network protocol used for the service node and a receive end in the transit network, and the transit network is used to associate different service nodes.

The cloud platform deploys the service agent for the service node, and performs automatic network protocol translation by using the service agent, so that the service node can support access between applications for which different network protocols are used, and the service node does not need to be reconstructed. In this way, the cloud service providing method provided in this application can provide a cloud service in a plurality of scenarios, and an application scenario of the cloud service providing method is not limited by a network protocol, to expand an application scope of the cloud service providing method.

Optionally, before the cloud platform establishes the association relationship between the plurality of service nodes based on the network feature information and the association information, to obtain the cloud service network, the method further includes: The cloud platform provides a service configuration interface for the user, where the service configuration interface prompts the user to enter service feature information, the service feature information indicates all first resource sets needed for deploying the service node, and all resources in any first resource set are deployed in a same resource deployment region; and the cloud platform deploys the service node by using all the first resource sets.

In some implementation scenarios, the user may further deploy a client in the cloud service network. The client may be deployed in a plurality of modes. Descriptions are given below by using three deployment modes as an example.

In a first implementation, the service feature information or the network feature information further indicates that the service node is reused as a client. The service feature information indicates all first resource sets needed for deploying the service node. The method further includes: The cloud platform deploys the client by using all the first resource sets, and associates the client with the cloud service network.

In a second implementation, the service feature information or the network feature information further indicates that any one of all the first resource sets is further used to deploy a client, and the service feature information indicates all the first resource sets needed for deploying the service node; and the method further includes: The cloud platform deploys the client by using any first resource set, and associates the client with the cloud service network.

In a third implementation, the method further includes: The cloud platform provides a client configuration interface for the user, where the client configuration interface prompts the user to enter client feature information, and the client feature information indicates a client and a second resource set needed for deploying the client. The cloud platform deploys the client by using the second resource set, and associates the client with the cloud service network.

When the cloud service network further includes the client, different network protocols are used for a resource set used to deploy the client and a resource set used to deploy the service node. In this case, the cloud service network supports access of applications for which different network protocols are used.

In an implementation, the method further includes: The cloud platform deploys a client agent for the client by using the resource set used to deploy the client, where the client agent is used to: when different network protocols are used for the client and the transit network that is in the cloud service network, translate a destination address and a source address of a packet transmitted between the client and the transit network into addresses that comply with a network protocol used for the service node and a receive end in the transit network, and the transit network is used to associate different service nodes.

In addition, when the cloud service network further includes the client, in an implementation of supporting access between applications for which different listening protocols are used, the method further includes: The cloud platform deploys a second client agent and a third client agent for the client by using the resource set used to deploy the client, where the second client agent is used to: when the client sends a packet for which a first listening protocol is used, forward the packet to a destination end of the packet according to the first listening protocol; or when the client sends a packet for which a second listening protocol is used, forward the packet to the third client agent; and the third client agent is used to forward the packet to the destination end of the packet according to the second listening protocol. In this way, the cloud service network can support access between layer 4 and layer 7 applications.

Optionally, one client can be associated with one or more cloud service networks, and the plurality of cloud service networks are used to carry different cloud services. When an application requirement requires that a client be associated with a plurality of cloud service networks, the user optionally enters, in the client configuration interface, all the cloud service networks associated with the client.

In this application, the plurality of service nodes in the cloud service network are optionally deployed by a same user, or are respectively deployed by a plurality of users. When the plurality of service nodes in the cloud service network are deployed by different users, the cloud service network may be considered as supporting cross-account access.

The user instructing to deploy the cloud service network is optionally the same as or different from a user instructing to deploy all the service nodes in the cloud service network. For example, a management department of a company instructs to deploy the cloud service network, and a plurality of business departments of the company separately instruct to deploy the plurality of service nodes. When the user instructing to deploy the cloud service network is different from the user instructing to deploy all the service nodes in the cloud service network, the cloud service network may be considered as supporting cross-account access.

Optionally, one service node can be associated with one or more cloud service networks, and the plurality of cloud service networks are used to implement different cloud services. When an application requirement requires that a service node be associated with a plurality of cloud service networks, the user optionally enters, in the service configuration interface, all the cloud service networks associated with the service node.

After obtaining the association information, the cloud platform may establish, on the public platform, the association relationship between the plurality of service nodes indicated by the association information, to obtain the cloud service network. Establishing the association relationship between the plurality of service nodes is actually to establish connections for access between the plurality of service nodes in the cloud service network. Optionally, an implementation process is as follows: The cloud platform creates a transit network based on the network feature information and the association information, and associates the plurality of service nodes with the transit network, to obtain the cloud service network.

Optionally, the transit network is further used to translate addresses of the plurality of service nodes. Because access between different service nodes in the cloud service network needs to be over the transit network, the transit network may obtain addresses of all the service nodes in the cloud service network, and when addresses of different service nodes conflict, the transit network uniformly allocates addresses to these service nodes, and translate the addresses of the service nodes into a unique address in the cloud service network, so that an address conflict of the service nodes does not occur. For example, when the IPv4 protocol is used for the plurality of service nodes in the cloud service network, addresses of some service nodes conflict. The transit network translates addresses of the some service nodes, so that the addresses of the service nodes can be uniformly planned, thereby resolving an IPv4 protocol address conflict of the plurality of service nodes. In this way, the cloud service network can resolve an IPv4 address conflict and address space insufficiency, so that the user does not need to plan network and address space, to further enhance availability of a cloud service provided by the cloud platform.

Optionally, the service nodes associated with the cloud service network may be created by the user. Before the cloud platform provides the service configuration interface for the user, the method further includes: The cloud platform provides a resource configuration interface for the user based on the cloud service providing request, where the resource configuration interface prompts the user to enter resource feature information, and the resource feature information indicates a resource needed by the user. The cloud platform obtains a first resource set including a resource indicated by the resource feature information, where the first resource set is used to create a service node.

In an implementation, the resource feature information further indicates that a resource is provided in a form of a virtual local area network and indicates a source of the virtual local area network, where the virtual local area network includes a plurality of compute instances having a specified network relationship. That the cloud platform obtains the first resource set including the resource indicated by the resource feature information includes: When the resource feature information indicates that the virtual local area network is created based on a resource, the cloud platform creates the virtual local area network by using the resource, to obtain the first resource set; and when the resource feature information indicates that an inventory virtual local area network is used, the cloud platform obtains the inventory virtual local area network, to obtain the first resource set.

Optionally, the first resource set includes one or more compute instances, and the compute instance includes a virtual machine, a container, a function, and a bare metal server.

According to a second aspect, this application provides a cloud service providing apparatus. The apparatus is used in a cloud platform. The apparatus includes: an interaction module, configured to provide a network configuration interface for a user, where the network configuration interface prompts the user to enter network feature information, and the network feature information indicates a cloud service network needed for implementing a target cloud service, where the interaction module is further configured to provide a network association interface for the user, where the network association interface prompts the user to enter association information, the association information indicates a plurality of service nodes associated with the cloud service network, the service node is used to deploy an application of the user, the application is used to implement the target cloud service, and the plurality of service nodes are deployed based on a resource in one or more resource deployment regions; and a processing module, configured to establish an association relationship between the plurality of service nodes based on the network feature information and the association information, to obtain the cloud service network.

Optionally, the plurality of service nodes meet one or both of the following: The plurality of service nodes are deployed based on cloud resources in different cloud resource deployment regions on the cloud platform; and the plurality of service nodes are deployed based on at least two of a public network resource, a cloud resource in a cloud resource deployment region, and a self-owned resource of the user.

Optionally, the service node is deployed based on a resource in one or more resource deployment regions.

Optionally, the service node meets one or both of the following: The service node is deployed based on cloud resources in different cloud resource deployment regions on the cloud platform; and the service node is deployed based on at least two of a public network resource, a cloud resource in a cloud resource deployment region, and a self-owned resource of the user.

Optionally, different listening protocols are used for the plurality of service nodes.

Optionally, different network protocols are used for a plurality of first resource sets used to deploy the service node.

Optionally, different network protocols are used for a plurality of first resource sets used to deploy the plurality of service nodes.

Optionally, the processing module is further configured to deploy a service agent for the service node, where the service agent is used to: when different network protocols are used for the service node and a transit network in the cloud service network, translate a destination address and a source address of a packet transmitted between the service node and the transit network into addresses that comply with a network protocol used for the service node and a receive end in the transit network, and the transit network is used to associate different service nodes.

Optionally, the interaction module is further configured to provide a service configuration interface for the user, where the service configuration interface prompts the user to enter service feature information, the service feature information indicates all first resource sets needed for deploying the service node, and all resources in any first resource set are deployed in a same resource deployment region; and deploy, through the cloud platform, the service node by using all the first resource sets.

Optionally, the service feature information or the network feature information further indicates that the service node is reused as a client, and the service feature information indicates all the first resource sets needed for deploying the service node; and the processing module is further configured to deploy the client by using all the first resource sets, and associate the client with the cloud service network.

Optionally, the service feature information or the network feature information further indicates that any one of all the first resource sets is further used to deploy a client, and the service feature information indicates all the first resource sets needed for deploying the service node; and the processing module is further configured to deploy the client by using any first resource set, and associate the client with the cloud service network.

Optionally, the interaction module is further configured to provide a client configuration interface for the user, where the client configuration interface prompts the user to enter client feature information, and the client feature information indicates a client and a second resource set needed for deploying the client; and the processing module is further configured to deploy the client by using the second resource set, and associate the client with the cloud service network.

Optionally, different network protocols are used for a resource set used to deploy the client and a resource set used to deploy the service node.

Optionally, the processing module is further configured to deploy a client agent for the client by using the resource set used to deploy the client, where the client agent is used to: when different network protocols are used for the client and the transit network that is in the cloud service network, translate a destination address and a source address of a packet transmitted between the client and the transit network into addresses that comply with a network protocol used for the service node and a receive end in the transit network, and the transit network is used to associate different service nodes.

Optionally, the processing module is further configured to deploy a second client agent and a third client agent for the client by using the resource set used to deploy the client, where the second client agent is used to: when the client sends a packet for which a first listening protocol is used, forward the packet to a destination end of the packet according to the first listening protocol; or when the client sends a packet for which a second listening protocol is used, forward the packet to the third client agent; and the third client agent is used to forward the packet to the destination end of the packet according to the second listening protocol.

Optionally, the client is associated with a plurality of cloud service networks, and the plurality of cloud service networks are used to implement different cloud services.

Optionally, the plurality of service nodes are respectively deployed by a plurality of users.

Optionally, the cloud service network and the plurality of service nodes are separately deployed by a plurality of users.

Optionally, the service node is associated with a plurality of cloud service networks, and the plurality of cloud service networks are used to implement different cloud services.

Optionally, the processing module is specifically configured to: create, through the cloud platform, a transit network based on the network feature information and the association information, and associates the plurality of service nodes with the transit network, to obtain the cloud service network.

Optionally, the transit network is further used to translate addresses of the plurality of service nodes.

Optionally, the interaction module is further configured to provide a resource configuration interface for the user based on the cloud service providing request, where the resource configuration interface prompts the user to enter resource feature information, and the resource feature information indicates a resource needed by the user; and the processing module is further configured to obtain a first resource set including a resource indicated by the resource feature information, where the first resource set is used to create a service node.

Optionally, the resource feature information further indicates that a resource is provided in a form of a virtual local area network and indicates a source of the virtual local area network, where the virtual local area network includes a plurality of compute instances having a specified network relationship. The processing module is specifically configured to: when the resource feature information indicates that the virtual local area network is created based on a resource, create, through the cloud platform, the virtual local area network by using the resource, to obtain the first resource set; and when the resource feature information indicates that an inventory virtual local area network is used, obtain, through the cloud platform, the inventory virtual local area network, to obtain the first resource set.

Optionally, the first resource set includes one or more compute instances, and the compute instance includes a virtual machine, a container, a function, and a bare metal server.

According to a third aspect, this application provides a compute device, including a memory and a processor. The memory stores program instructions, and the processor runs the program instructions to perform the method according to any one of the first aspect and the possible implementations of the first aspect of this application.

According to a fourth aspect, this application provides a compute device cluster, including a plurality of compute devices. The plurality of compute devices include a plurality of processors and a plurality of memories, the plurality of memories store program instructions, and the plurality of processors run the program instructions, to cause the compute device cluster to perform the method according to any one of the first aspect and the possible implementations of the first aspect in this application.

According to a fifth aspect, this application provides a computer-readable storage medium. The computer-readable storage medium is a non-volatile computer-readable storage medium. The computer-readable storage medium includes program instructions. When the program instructions are run on a compute device, the compute device is caused to perform the method according to any one of the first aspect and the possible implementations of the first aspect in this application.

According to a sixth aspect, this application provides a computer program product including instructions. When the computer program product runs on a computer, the computer is caused to perform the method according to any one of the first aspect and the possible implementations of the first aspect in this application.

### BRIEF DESCRIPTION OF DRAWINGS

FIG. 1 is a diagram of a structure of an implementation scenario of a cloud service providing method according to an embodiment of this application;
FIG. 2 is a diagram of deployment of resources on a cloud platform according to an embodiment of this application;
FIG. 3 is a flowchart of a cloud service providing method according to an embodiment of this application;
FIG. 4 is a diagram of instructing to create a VPC in a resource configuration interface according to an embodiment of this application;
FIG. 5 is a diagram of instructing to use an inventory VPC in a resource configuration interface according to an embodiment of this application;
FIG. 6 is a diagram of a service configuration interface according to an embodiment of this application;
FIG. 7 is a diagram in which a network association interface is a part of a network configuration interface according to an embodiment of this application;
FIG. 8 is a diagram of a network model according to an embodiment of this application;
FIG. 9 is a flowchart of another cloud service providing method according to an embodiment of this application;
FIG. 10 is a flowchart of still another cloud service providing method according to an embodiment of this application;
FIG. 11 is a flowchart of yet another cloud service providing method according to an embodiment of this application;
FIG. 12 is a diagram of a second client agent and a third client agent according to an embodiment of this application;
FIG. 13 is a diagram of a structure of a cloud service network according to an embodiment of this application;
FIG. 14 is a diagram of another structure of a cloud service network according to an embodiment of this application;
FIG. 15 is a diagram of a structure of a cross-region global cloud service network according to an embodiment of this application;
FIG. 16 is a diagram in which a cloud service network is a cross-region global network, and a service node is a cross-region global application according to an embodiment of this application;
FIG. 17 is a diagram of a cloud service network that is a global network across a region, a public network, and a customer's on-premises equipment room according to an embodiment of this application;
FIG. 18 is a diagram of a global network for cross-account and cross-department collaboration of an enterprise according to an embodiment of this application;
FIG. 19 is a diagram of relationships between accounts involved in a cloud service network according to an embodiment of this application;
FIG. 20 is a diagram of a cloud service providing apparatus according to an embodiment of this application;
FIG. 21 is a diagram of a structure of a compute device according to an embodiment of this application; and
FIG. 22 is a diagram of a structure of a compute device cluster according to an embodiment of this application.

### DESCRIPTION OF EMBODIMENTS

To make objectives, technical solutions, and advantages of this application clearer, the following further describes implementations of this application in detail with reference to the accompanying drawings.

For ease of understanding, the following first explains technologies and background in embodiments of this application.

A virtual private cloud (virtual private cloud, VPC) is a secure and logically isolated network environment. A user can define a virtual network on the VPC. The virtual network provides a same network service as a conventional network, and also provides advanced network services such as elastic internet protocols (elastic internet protocols, EIPs) and security groups. From the perspective of services, the VPC is a cloud, a cloud computing service, and a set of resources that are run on a public cloud and among which a part of public cloud resources are isolated for a user for private use by the user. The VPC is managed by the public cloud and run on a public resource, but can ensure that resources are isolated for each user. When using the VPC, the user is not affected by another user, and feels like using a private cloud of the user. For example, a virtual private network includes a plurality of compute instances (for example, virtual machines) having a specified network relationship.

Network address translation (network address translation, NAT) is a technology used in computer networks. The technology is used to translate a group of Internet Protocol (Internet Protocol, IP) addresses into another group of IP addresses. For example, address information in an IP packet header is replaced, to perform address translation on at least either of a destination IP address and a source IP address of a packet that needs to be sent. The NAT technology may include: a destination network address translation (destination network address translation, DNAT) technology, a source network address translation (source network address translation, SNAT) technology, and a source/destination network address translation (full network address translation, FullNAT) technology. DNAT is to translate the destination IP address of the packet. SNAT is to translate the source IP address of the packet. FullNAT is to translate both the source IP address and the destination IP address of the packet. NAT is usually used to map a group of private IP addresses to a public IP address. This can help resolve a problem of Internet Protocol version 4 (Internet Protocol version 4, IPv4) address shortage, and enhance network security. For example, NAT64 may be used to translate an Internet Protocol version 6 (Internet Protocol version 6, IPv6) data packet into an IPv4 data packet. Similarly, NAT46 may be used to translate an IPv4 data packet into an IPv6 data packet.

Load balancing (load balancing, LB) is a network technology that distributes traffic to a plurality of servers or devices to balance load and enhance system reliability, availability, and performance.

A cloud backbone network is a software-defined wide area network (software-defined wide area network, SD-WAN). The cloud backbone network is a network abstracted from hardware and creates virtualized network coverage. The cloud backbone network enables customers to build, manage, and monitor a unified global network more quickly and easily. Therefore, the customers can connect an on-premises internet data center (internet data center, IDC), branches, and a public cloud to a unified global network on a global cloud service panel, to obtain a unified view of the global network.

The internet data center (Internet Data Center, IDC) is an internet-based network, and provides operations and maintenance facilities and related service systems for devices that collect, store, process, and send data in a centralized manner. Conceptually, the internet data center may be regarded as a public commercial internet "equipment room", and is also an IT professional service and an important infrastructure of the IT industry. The IDC is not only a service, but also a network. The IDC is a part of basic network resources, and provides high-end data delivery (data delivery) services and high-speed access services like a backbone network and an access network. Generally, an on-premises IDC of a user may be understood as an on-premises equipment room of the user, and is a standardized carrier-class equipment room environment built by the user by using existing internet communication lines and bandwidth resources to provide comprehensive services such as server hosting, renting, and related value-added services.

An elastic internet protocol (elastic internet protocol, EIP) address is also referred to as an elastic public internet protocol address, and is an IP address used by a computer device in a private network to access a public network.

A virtual machine (virtual machine, VM) is a complete computer system that is obtained through simulation by using a virtualization technology, has a function of a complete hardware system, and runs in a completely isolated environment. Some instruction subsets of the virtual machine may be processed in a host (host) machine, and some other instructions may be executed in a simulation manner. Users can purchase cloud services by renting virtual machines. In a possible implementation of the virtual machine, the virtual machine in embodiments of this application may be an elastic cloud server (elastic cloud service, ECS).

A gateway (gateway) is also referred to as an inter-network connector or a protocol converter. The gateway implements network interconnection above a network layer. The gateway is the most complex network interconnection device and is usually used for interconnection between two networks for which different upper-layer protocols are used. The gateway may be used for wide area network interconnection and local area network interconnection. In addition, because the gateway is used between two systems with different network protocols, data formats, or languages, or even completely different architectures, the gateway also plays an important role of translation between the two systems. It should be noted that the gateway in embodiments of this application may be deployed by using a virtual machine, or may be deployed by using a physical server. This is not specifically limited in embodiments of this application.

A virtual private network (virtual private network, VPN) may be understood as an internal virtual private line of an enterprise. The virtual private network can establish, by using a special encrypted communication protocol, a dedicated communication line between two or more enterprise intranets that are connected to the internet and located at different places.

Cloud connect (cloud connect, CC) can provide a capability of quickly building ultra-fast, high-quality, and stable networks between VPCs across regions and between VPCs on the cloud and data centers off the cloud, and allows users to build a global cloud network with enterprise-class scalability and communication capabilities.

An enterprise router (enterprise router, ER) may be connected to a VPC or local network to build a hub-spoke network. The enterprise router is a central cloud router with high specifications, high bandwidth, and high performance. The enterprise router uses a border gateway protocol (border gateway protocol, BGP) for route learning, dynamic route selection, and link switching. This significantly improves network scalability and operations and maintenance efficiency, and ensures service continuity.

Domain name resolution is a service that points a domain name to an IP address of website space so that a website can be easily accessed by a user by using a registered domain name. The IP address is a digital address that identifies a site on a network. The IP address is usually a segment of data with a fixed length and is difficult to remember. For ease of remembering, the domain name is used to replace the IP address to identify a site address. Therefore, domain name resolution is a process of translating a domain name into an IP address. For example, a process of obtaining, by using a host name, an IP address corresponding to the host name is referred to as domain name resolution (or host name resolution), and in this process, there is no need to an IP string that can be directly read by a machine. Generally, domain name resolution is performed by a domain name system (domain name system, DNS). The DNS is a distributed database used for mapping between a domain name and an IP address on the internet, and allows the user to access the internet more conveniently.

Currently, before a user uses a cloud service, developers of the cloud service need to create various network objects based on a requirement of the user for the cloud service by using various resources provided by a cloud platform, and performs related configuration on the network objects, to establish, on the cloud platform, a cloud service network for implementing the cloud service needed by the user.

However, currently, deployment of the cloud service network is subject to various restrictions, affecting performance of the cloud service provided by the cloud service network. Deployment of the cloud service network depends on the resources provided by the cloud platform, and deployment locations of the resources affect a range for providing cloud services by the cloud service network. In addition, the cloud service network usually includes a large quantity of network objects, and connection relationships between different network objects are complex. When a cloud service is implemented on the cloud platform, network configuration that needs to be performed by the developers on the cloud platform is increasingly complex, causing difficulties to the developers. For example, an application usually includes a plurality of components and services that may be distributed on a plurality of VPCs in different regions. To support scalability, and high availability and flexibility of the application, the developers need to perform complex network configuration. Further, as network security threats increase, security becomes particularly important. Therefore, the developers need to configure finer-grained access control and security policies for the network, increasing complexity of network configuration. Moreover, different applications and services have different network requirements, such as low latency, high bandwidth, and higher security and reliability, increasing complexity of network configuration. Furthermore, cloud platforms provided by different public cloud vendors have different cloud services and solutions, and therefore, are not standardized. For example, a plurality of methods, such as cloud connect, a private line, and a VPN may be used to connect networks across regions. As a result, the developers need to master a plurality of network configuration modes. In addition, when a customer's application is deployed on a plurality of VPCs, a VPC address conflict needs to be manually planned. Consequently, configuration is complex and error-prone, and availability of providing a cloud service by the cloud platform is poor.

For example, in a current manner in which the cloud platform provides a cloud service, establishment of the cloud service network mainly includes the following steps:
1. Create a VPC in a specified region, configure a subnet segment, and plan addresses. When the cloud service network includes a plurality of VPCs, an address conflict between different VPCs during address planning needs to be avoided. In addition, when IPv4 networking is used, because addresses of a plurality of VPCs across regions cannot conflict with each other, attention needs to be paid to a problem of insufficient address space.
2. Deploy customers' applications on the VPCs, purchase a load balancer gateway, and configure computational power resources of the applications to the backend of the load balancer gateway.
3. Purchase gateways such as cloud connect and an enterprise router, and configure the gateways such as the cloud connect and the enterprise router to connect VPCs in different regions.
4. Configure a rule, for example, a security group, on a VPC on which each application is located, and configure and register a DNS.
5. Provide a service that can be accessed from a public network or a service that accesses a public network, and configure an EIP.
6. If the cloud service further needs to access an on-premises IDC, create a VPN or DC to connect to the on-premises IDC.

It can be learned that, currently, network configuration for establishing the cloud service network is complex, and consequently, availability of providing a cloud service by the cloud platform is poor.

In view of this, embodiments of this application provide a cloud service providing method. In the method, a cloud platform needs to provide a network configuration interface and a network association interface for a user, and associate a plurality of service nodes (services) based on information entered by the user in these interfaces, so that a cloud service network used to implement a target cloud service can be obtained. The service node is used to deploy an application of the user. The application is used to implement the target cloud service. The network configuration interface prompts the user to enter network feature information. The network feature information indicates the cloud service network that implements the target cloud service. The network association interface prompts the user to enter association information. The association information indicates the plurality of service nodes associated with the cloud service network. After obtaining the network feature information and the association information from the network configuration interface, the cloud platform can establish an association relationship between the plurality of service nodes based on the network feature information and the association information, to obtain the cloud service network, so as to provide the target cloud service for the user over the cloud service network.

In the cloud service network, because the plurality of service nodes are deployed based on a resource in one or more resource deployment regions, the cloud service network is not limited to being deployed based on a resource in a specific resource deployment region. The cloud service network may be considered as a global network, and can provide a service for the user by using resources deployed in the plurality of resource deployment regions. This expands a range for the cloud service network to provide a cloud service, and enhances performance of the cloud service provided by the cloud service network.

The technical solutions of this application are described in detail from a plurality of perspectives such as an implementation scenario, a method procedure, a hardware apparatus, and a software apparatus in this specification.

An application scenario of embodiments of this application is first described below by using an example.

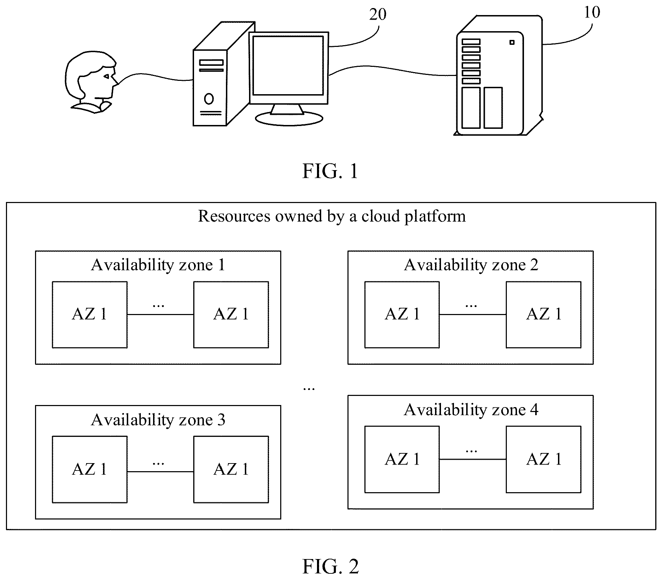

FIG. 1 is a diagram of a structure of an implementation environment in this application. As shown in FIG. 1, the implementation environment includes a cloud platform 10 and a client 20. A communication connection may be established between the cloud platform 10 and the client 20 over a network. Optionally, the network may be a local area network, the Internet, or another network. This is not limited in embodiments of this application. A user can interact with the cloud platform 10 through the client 20. For example, the user may send information such as an instruction and a cloud service request to the cloud platform 10 through the client 20. The cloud platform 10 is configured to perform response based on the information sent from the client 20 to the cloud platform 10.

A large quantity of basic resources, such as a compute resource, a storage resource, and a network resource, owned by a cloud service provider are deployed on the cloud platform 10. For example, the compute resource may be a compute device (for example, a server) that can provide a computing capability. The cloud platform may implement, by using the large quantity of basic resources, the cloud service providing method provided in embodiments of this application. In embodiments of this application, the cloud platform 10 may be a cloud platform of a central cloud, a cloud platform of an edge cloud, or a cloud platform including a central cloud and an edge cloud. This is not specifically limited in embodiments of this application. In addition, when the cloud platform 10 is a cloud platform including a central cloud and an edge cloud, the technical solutions provided in embodiments of this application can be partially executed by a cloud platform deployed on the edge cloud, and partially executed by a cloud platform deployed on the central cloud. In addition, the cloud platform 10 may be a cloud platform of a private cloud or a public cloud. This is not specifically limited in embodiments of this application.

In an implementation, as shown in FIG. 2, a location of a resource on the cloud platform may be described by using a region (region) and an availability zone (availability zone, AZ). The user may create a resource in a specified region or AZ. Regions are divided based on geographical locations and network latency. Public services, such as elastic computing, block storage, object storage, VPC network, EIP, and image management, are shared in a same region. The regions are classified into universal regions and dedicated regions. A universal region provides universal cloud services for common tenants. A dedicated region carries only a same type of services or provides services only for specific tenants. An AZ is a collection of one or more physical data centers. In an AZ, computing, network, and storage, and other resources are logically divided into a plurality of clusters. One region may usually include a plurality of AZs. The plurality of AZs in one region are interconnected via high-speed optical fibers, to meet a users' requirement for constructing a high availability system across AZs.

The client 20 may be a computer, a personal computer, a laptop computer, a mobile phone, a smartphone, a tablet computer, a cloud host, a portable mobile terminal, a multimedia player, an e-book reader, a wearable device, a smart home appliance, an artificial intelligence device, a smart wearable device, a smart vehicle-mounted device, an internet of things device, or the like.

In embodiments of this application, the user can access the cloud platform through the client 20, and enter information in an interface provided by the cloud platform, so that the cloud platform creates a cloud service network for the user based on the entered information. The cloud service network is used to implement a cloud service for the user. In this case, a function of creating the cloud service network by the cloud platform for the user may be abstracted, on the cloud platform, into a cloud service by the cloud service provider. The cloud service may be provided as an independent cloud service, or may be provided as an additional service of another cloud service.

In an implementation, the cloud service providing method provided in embodiments of this application may be implemented by running an executable program by the compute device in the cloud platform 10. For example, in the cloud service providing method, functions of providing an interface by the cloud platform for the user and performing a related operation based on information entered by the user in the interface are optionally presented in a form of an application installation package. After the application installation package is installed in the compute device in the cloud platform 10, the compute device in the cloud platform 10 can implement a corresponding function by running an executable program in the application installation package.

It should be understood that the foregoing content is an example for description of an application scenario of the cloud service providing method provided in embodiments of this application, and does not constitute a limitation on the application scenario of the cloud service providing method. A person of ordinary skill in the art may learn that, as a service requirement changes, the application scenario of the cloud service providing method may be adjusted based on an application requirement. Application scenarios of the cloud service providing method are not enumerated one by one in embodiments of this application.

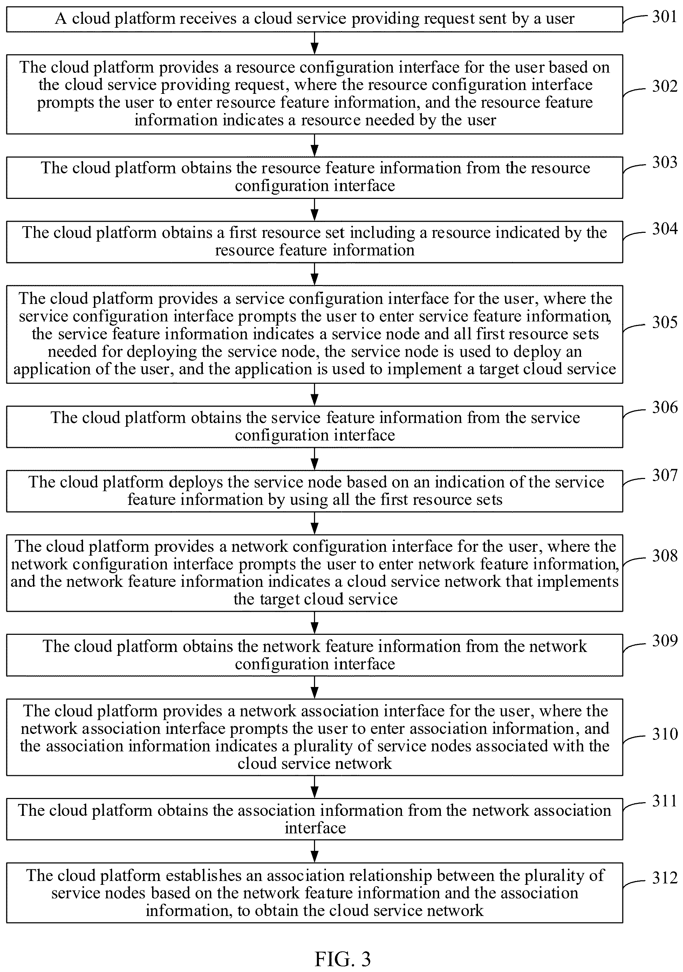

The cloud service providing method provided in embodiments of this application is described below. As shown in FIG. 3, the cloud service providing method 400 includes the following steps.

Step 301: A cloud platform receives a cloud service providing request sent by a user.

When the user needs the cloud platform to provide a cloud service for the user, a specified operation is performed on a client used by the user, to instruct the client to send the cloud service providing request to the cloud platform, so as to request the cloud platform to provide the corresponding cloud service for the user.

Step 302: The cloud platform provides a resource configuration interface for the user based on the cloud service providing request, where the resource configuration interface prompts the user to enter resource feature information, and the resource feature information indicates a resource needed by the user.

In this application, after receiving the cloud service providing request sent by the user, the cloud platform can provide the resource configuration interface for the user, to prompt the user to enter the resource feature information. The resource feature information indicates the resource needed by the user, that is, a resource used by the user to deploy a service node. A cloud service network used to implement the cloud service for the user in this application can be deployed based on resources in different resource deployment regions on the cloud platform. Resources in each resource deployment region may be considered as being of one resource type. The resource configuration interface needs to prompt the user to select, from a plurality of resource types, a resource type needed by the user. For example, resources that can be selected by the user in this application include resources in a plurality of resource deployment regions, for example, a public network resource, a cloud resource in a cloud resource deployment region, and a self-owned resource of the user. It should be understood that, with development of cloud service technologies, types of the resources that can be selected may be adjusted based on an application requirement, and are not enumerated one by one in embodiments of this application.

The public network resource is a resource deployed on the Internet. When the cloud service network is created based on the public network resource, optionally, a service that has been created on the Internet is directly used to create the cloud service network. In this case, the resource configuration interface needs to prompt the user to enter identification information of the created service, and the resource feature information includes the identification information. For example, the identification information of the service is an IP address, a domain name, or the like of the service.

The cloud resource is a large quantity of basic resources owned by a cloud service provider. For example, one region or a combination of a plurality of regions may be referred to as a cloud resource deployment region. Alternatively, one AZ or a combination of a plurality of AZs may be referred to as a cloud resource deployment region. When the cloud service network is created based on the cloud resource, the resource configuration interface needs to prompt the user to enter indication information of the cloud resource, and the resource feature information includes the indication information. In an implementation, the indication information indicates a specification, a quantity, and the like of cloud resources, so that the cloud platform can determine, based on the specification and the quantity, the cloud resource used to create the cloud service network. Further, the indication information further indicates the cloud resource deployment region to which the cloud resource belongs, for example, a region to which the cloud resource belongs. In this case, the user needs to specify the cloud resource deployment region to which the cloud resource belongs. It should be understood that a presentation form of the indication information is optionally adjusted based on an application requirement, provided that it is ensured that the cloud platform can determine the cloud resource based on the indication information.

The self-owned resource is a resource that is owned by the user and that is outside the cloud platform. For example, the self-owned resource is a resource in an on-premises equipment room of the user, for example, an IDC, or a resource on another cloud platform purchased by the user. When the cloud service network is created based on the self-owned resource, optionally, the cloud platform directly uses a service that has been created on the self-owned resource to create the cloud service network. In this case, the resource configuration interface needs to prompt the user to enter identification information of the created service, and the resource feature information includes the identification information. For example, the identification information of the service is an IP address or the like of the service.

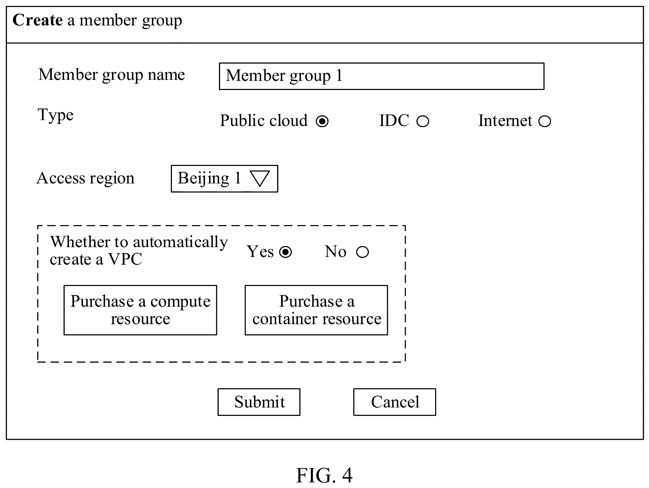

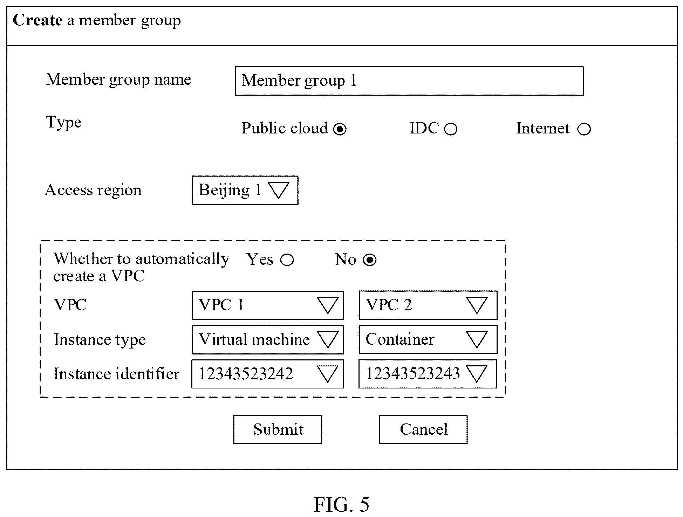

Optionally, the resources can be provided in a form of a virtual local area network. The virtual local area network includes a plurality of compute instances having a specified network relationship. For example, the virtual local area network is a virtual private cloud. For a source of the virtual local area network, the virtual local area network is optionally created based on a resource selected by the user, or the virtual local area network is optionally selected by the user from existing virtual local area networks (also referred to as inventory virtual local area networks). In this case, the resource configuration interface further needs to prompt the user to enter the source of the virtual local area network, and the resource feature information includes information indicating the source. For example, FIG. 4 is a diagram of instructing to create a VPC in a resource configuration interface according to an embodiment of this application. As shown in FIG. 4, when the user chooses to automatically create a VPC, the resource configuration interface further presents purchase options to the user, to prompt the user to select a resource type needed for creating the VPC, for example, a compute resource and/or a container resource. When the user selects one of the types, the resource configuration interface further presents a corresponding resource purchase interface (where the interface is not presented in FIG. 4) to the user, so that the user selects, in the resource purchase interface, a quantity, a specification, and the like of resources. FIG. 5 is a diagram of instructing to use an inventory VPC in a resource configuration interface according to an embodiment of this application. As shown in FIG. 5, when the user chooses not to automatically create a VPC, the resource configuration interface presents a drop-down list of existing VPCs to the user, so that the user selects a needed VPC from the existing VPCs. In addition, the resource configuration interface further presents drop-down lists for the user to select a needed instance type and instance identifier from the existing VPCs. For example, the user selects a VPC 1 and a VPC 2 in the drop-down list, and selects a virtual machine whose identifier is 12343523242 on the VPC 1 and a container whose identifier is 12343523243 on the VPC 2. Further, the resource configuration interface can further present, to the user, a resource list (not presented in FIG. 4 and FIG. 5) of resources owned by the user. Information presented in the resource list includes: an identifier of a resource, a name of the resource, a status (for example, running or not running) of the resource, and an availability zone in which the resource is located. It should be noted that, when selecting a virtual local area network, the user optionally selects a part or all of resources in the virtual local area network. In addition, the user optionally selects one or more virtual local area networks to deploy a service node.

In this application, the resource used to create the cloud service network optionally includes one or more compute instances. For example, the compute instance includes a virtual machine, a container, a function, and a bare metal server. In this case, the resource configuration interface further provides a type of a compute instance entered by the user in the interface. Correspondingly, the resource configuration interface further needs to prompt the user to enter the type of the compute instance of a resource, and the resource feature information further includes indication information of the type of the compute instance.

In addition, when prompting the user to enter the resource needed by the user, optionally, the cloud platform selects a resource by service node, or selects a resource by resource set. Because a service node may be deployed based on one or more resource sets, when the resource is selected by service node, the resource configuration interface prompts to enter, in the interface, all resources needed for one service node. When the resource is selected by resource set, optionally, the cloud platform presents one or more resource configuration interfaces to the user, and each resource configuration interface prompts the user to enter a resource included in one resource set. In this case, the resource configuration interface is further used to prompt the user to enter a name of the resource set, so that different resource sets can be distinguished. The resource feature information further indicates the name of the resource set. The resource set is also referred to as a member group (member group).

Further, the user can further indicate a network protocol used for a resource set used to deploy a service node. In this case, the resource configuration interface further needs to prompt the user to enter the network protocol used for the resource set. When entering the resource feature information in the resource configuration interface, the user may enter, based on an application requirement, the network protocol that needs to be used for the current resource set. The resource feature information further indicates the network protocol used for the resource set. For example, the resource configuration interface presents, to the user, a drop-down list for selecting a network protocol used for the resource set, so that the user selects, from the drop-down list, the network protocol used for the resource set. Options of the network protocol optionally includes: IPv4, IPv6, remote direct data access (remote direct memory access, RDMA) protocol, and the like.

Optionally, different network protocols are optionally used for a plurality of service nodes in the cloud service network, in other words, different network protocols are used for a plurality of resource sets used to deploy the plurality of service nodes in the cloud service network. In this case, the cloud service network can support access between applications for which different network protocols are used, for example, access between IPv4 and IPv6. Similarly, when a same service node is deployed based on a plurality of resource sets, different network protocols are also optionally used for the plurality of resource sets used to deploy the service node. In this case, the service node can support access using different network protocols, for example, access between IPv4 and IPv6. That different network protocols are used for the plurality of service nodes in the cloud service network includes: Network protocols used for all the service nodes in the cloud service network are different form each other; or network protocols used for a part of the service nodes in the cloud service network are the same, and network protocols used for a part of the service nodes are different. That different network protocols are used for the plurality of resource sets used to deploy the service node includes: Network protocols used for the plurality of resource sets used to deploy the service node are different from each other; or network protocols used for a part of the plurality of resource sets used to deploy the service node are the same, and network protocols used for a part of the resource sets are different.

Step 303: The cloud platform obtains the resource feature information from the resource configuration interface.

After the user enters the resource feature information in the resource configuration interface, the cloud platform may obtain, from the resource configuration interface, the resource feature information entered by the user.

Step 304: The cloud platform obtains a first resource set including a resource indicated by the resource feature information.

For ease of distinguishing from a resource set used to deploy the client, in this specification, the resource set used to deploy the service node is referred to as the first resource set, and the resource set used to deploy the client is referred to as a second resource set. After obtaining the resource feature information, the cloud platform needs to obtain the first resource set based on the resource feature information. All resources in any first resource set are deployed in a same resource deployment region. An implementation process includes: determining, in a resource deployment region based on an indication of the resource feature information, a resource indicated by the resource feature information, and determining that the resource belongs to the first resource set used to deploy the service node. For example, when the resource feature information indicates a specification and a quantity of cloud resources that need to be included in the first resource set, that the cloud platform obtains the first resource set includes: creating, by using a basic resource in a cloud resource deployment region, a resource that meets the specification and the quantity indicated by the resource feature information, and marking the resource as a resource in the first resource set. For another example, when the resource feature information further indicates a cloud resource deployment region to which a cloud resource belongs, the cloud platform creates a resource in the first resource set by using a basic resource in the cloud resource deployment region. For another example, when the resource feature information indicates that a virtual local area network needs to be created and indicates a quantity and a specification of resources on which the virtual local area network depends, the cloud platform creates, by using a basic resource in a cloud resource deployment region, a virtual local area network that meets the specification and the quantity indicated by the resource feature information, and marks the virtual local area network as a resource in the first resource set. For another example, when the resource feature information indicates that a resource of an inventory virtual local area network is used, the cloud platform may mark the inventory virtual local area network as a resource in the first resource set. In addition, when the resource feature information indicates that a resource used to deploy the service node is all or a part of resources in the virtual local area network, the cloud platform needs to select, from the virtual local area network, all or a part of resources indicated by the resource feature information, for example, select a compute resource on which an application has been deployed in the inventory virtual local area network, and mark the selected resource as a resource in the first resource set.

In addition, when the resource feature information further includes the indication information of the type of the compute instance, when the cloud platform obtains the first resource set, a type of a compute instance in the first resource set is the type that meets the indication of the indication information. For example, when the resource feature information indicates that the type of the compute instance is a virtual machine, all compute instances in the first resource set are virtual machines. When the resource feature information indicates that the type of the compute instance includes a virtual machine and a container, a part of compute instances in the first resource set is a virtual machine, and a part of compute instances is a container.

It should be noted that, if the resource feature information further indicates a network protocol used for the first resource set that is used to deploy the service node, when obtaining the first resource set, the cloud platform needs to select a resource for which the network protocol is used. If the resource feature information does not indicate a network protocol used for the resource, when obtaining the first resource set, the cloud platform does not need to pay special attention to a network protocol used for a resource. For example, when the resource feature information indicates that the IPv4 protocol is used for the resource, when determining a port in the first resource set, the cloud platform needs to select a port for which the IPv4 protocol is used. When the resource feature information indicates that the IPv6 protocol is used for the resource, when determining a port in the first resource set, the cloud platform needs to select a port for which the IPv6 protocol is used.

It should be noted that the foregoing content is described by using an example in which the user needs to select, in the resource configuration interface, a resource forming the first resource set. However, implementation processes in which the user does not need to select a resource used to deploy the service node and the user does not need to deploy the service node are not excluded. For example, when the first resource set already exists on the cloud platform, or there are remaining first resource sets created by the user in the foregoing process of deploying the service node, when the user needs to create the cloud service network, optionally, the user directly selects, from the inventory first resource sets, a first resource set needed for deploying the service node, and does not need to select, in the resource configuration interface, a resource forming the first resource set. For another example, when the user does not need to deploy the service node, the user also does not need to select, in the resource configuration interface, a resource forming the first resource set. It should be understood that when the user does not need to select, in the resource configuration interface, a resource forming the first resource set, step 302 to step 304 do not need to be performed.

Step 305: The cloud platform provides a service configuration interface for the user, where the service configuration interface prompts the user to enter service feature information, the service feature information indicates a service node and all first resource sets needed for deploying the service node, the service node is used to deploy an application of the user, and the application is used to implement a target cloud service.

In this application, the cloud platform can provide the service configuration interface for the user, to prompt the user to enter the service feature information, so that the cloud platform creates a service node in the cloud service network based on the service feature information. The service feature information indicates the service node and all the first resource sets needed for deploying the service node. In an implementation, the service configuration interface prompts the user to enter a name of the service node and names of all the first resource sets needed for deploying the service node, so that the service node is identified by using the name of the service node, and the first resource sets needed for deploying the service node are identified by using the names of the first resource sets. Correspondingly, the service feature information carries the name of the service node and the names of all the first resource sets needed for deploying the service node.

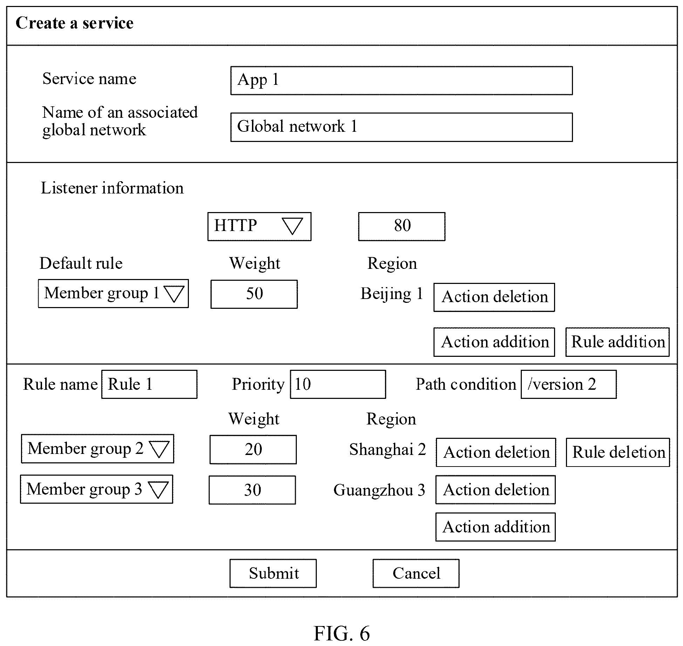

In an implementation, for any service node, the service node is optionally deployed based on a resource in one or more resource deployment regions. For example, the service node meets one or both of the following: The service node is deployed based on cloud resources in different cloud resource deployment regions on the cloud platform; and the service node is deployed based on at least two of a public network resource, a cloud resource in a cloud resource deployment region, and a self-owned resource of the user. In this case, because the service node is not limited to being deployed based on a resource in a specific resource deployment region, it can be learned that the service node can provide a service for the user by using the resources deployed in the plurality of resource deployment regions, and the service node may be considered as a global service node. When the user wants to deploy the global service node, the user needs to indicate, in the service configuration interface, a plurality of first resource sets used to deploy the service node, to transfer, to the cloud platform, the service feature information indicating that the service node is deployed based on the plurality of first resource sets. All resources in any first resource set are deployed in a same resource deployment region. For example, FIG. 6 is a diagram of a service configuration interface according to an embodiment of this application. As shown in FIG. 6, it can be learned, based on the service feature information currently entered in the service configuration interface, that the name of the service node is App 1, and all the first resource sets needed for the service node are a member group 1, a member group 2, and a member group 3. It can be learned that the service node needs to be deployed based on resources in three resource deployment regions, and the service node that needs to be deployed by the user is a global service node.

Similarly, the cloud service network is optionally a global network (global network). The global network includes a plurality of service nodes, and the plurality of service nodes are deployed based on resources in a plurality of resource deployment regions. For example, the plurality of service nodes meet one or both of the following: The plurality of service nodes are deployed based on cloud resources in different cloud resource deployment regions on the cloud platform; and the plurality of service nodes are deployed based on at least two of a public network resource, a cloud resource in a cloud resource deployment region, and a self-owned resource of the user. Therefore, the global network is not limited to being deployed based on a resource in a specific resource deployment region, and therefore, can provide a service for the user by using the resources deployed in the plurality of resource deployment regions. If the user wants to deploy the global network, the user optionally indicates, in the service configuration interface based on a requirement, a first resource set used to deploy a service node in the global network, without considering whether the first resource set conflicts with a resource used to deploy another service node. In addition, in this application, alternatively, different service nodes are optionally deployed based on a same resource set, and at least two service nodes optionally belong to a same cloud service network or belong to different cloud service networks. In this case, when a first resource set used to deploy a service node is indicated in the service configuration interface, there is no need to consider whether the first resource set conflicts with a resource used to deploy another service node.

When a service node is deployed, a listener (listener) and a rule (rule) like routing need to be configured for the service node. Therefore, the service configuration interface further needs to prompt the user to enter listener information and a related rule. The service feature information further includes the listener information and the related rule. The listener information indicates information, for example, a listening protocol used for the service node and a port used for the listener. A same listening protocol or different listening protocols are optionally used for the plurality of service nodes in the cloud service network. When different listening protocols are used for the plurality of service nodes in the cloud service network, the cloud service network can support access to applications for which different listening protocols are used. This enhances diversity of cloud services provided by the cloud service network. In an implementation, the service configuration interface presents, to the user, an entry box for information like a port, so that the user can enter information like a port of the service node. Similarly, the service configuration interface presents, to the user, a drop-down list for selecting a listening protocol used for the service node, so that the user can select the listening protocol used for the service node. Optionally, options of the listening protocol include: a transmission control protocol (Transmission Control Protocol, TCP), a user datagram protocol (User Datagram Protocol, UDP), a hypertext transfer protocol (HyperText Transfer Protocol, HTTP), a hypertext transfer protocol secure (Hypertext Transfer Protocol over Secure Socket Layer, HTTPS), a quick UDP internet connection (Quick UDP Internet Connection, QUIC) protocol, and the like. An application type of the service node is determined based on the listening protocol used for the service node. For example, when the TCP protocol is used for the service node, the application type of the service node is a layer 4 (layer 4, L4) application. When the HTTP protocol is used for the service node, the application type of the service node is a layer 7 (layer 7, L7) application. As shown in FIG. 6, it can be learned, based on the service feature information currently entered in the service configuration interface, that the listening protocol used for the service node is the HTTP protocol, and an HTTP port of the listener is a port 80, and in this case, the service node is a layer 7 application.

The service configuration interface further prompts the user to enter a routing rule (rule) of the service node and a corresponding action (action). The routing rule indicates a first resource set to which traffic of the service node needs to be sent. The action indicates an action to be performed when the traffic is sent to the first resource set. In addition, a button for routing rule addition, a button for routing rule deletion, a button for action addition, and a button for action deletion are further set in the service configuration interface, so that the user can perform routing rule addition or deletion and perform action addition or deletion based on a requirement. When the service node is deployed based on the plurality of first resource sets, the service configuration interface further prompts the user to enter a plurality of routing rules. For each routing rule, a priority, a path condition, and an action are set. For each action, a first resource set is bound, and a weight is set. When a request matches a path condition of the routing rule, the request is sent to a corresponding first resource set at a corresponding probability based on a weight of a corresponding action; or when a request does not match a path condition of the routing rule, the request is sent according to a default routing rule. The default routing rule is optionally a rule with no path condition. As shown in FIG. 6, it can be learned, based on the service feature information currently entered in the service configuration interface, that the routing rule instructs to route 50% of the traffic to the member group 1, 20% of the traffic to the member group 2, and 30% of the traffic to the member group 3, where the member group 1 is located in a region of Beijing 1, the member group 2 is located in a region of Shanghai 2, and the member group 3 is located in a region of Guangzhou 3.

In addition, the service configuration interface further prompts the user to enter a cloud service network associated with the service node, and the service feature information further indicates the cloud service network associated with the service node. As shown in FIG. 6, it can be learned, based on the service feature information currently entered in the service configuration interface, that the service node App 1 is associated with a cloud service network named global network 1. Optionally, one service node can be associated with one or more cloud service networks, and the plurality of cloud service networks are used to implement different cloud services. When an application requirement requires that a service node be associated with a plurality of cloud service networks, the user optionally enters, in the service configuration interface, all the cloud service networks associated with the service node.

Step 306: The cloud platform obtains the service feature information from the service configuration interface.

After the user enters the service feature information in the service configuration interface, the cloud platform may obtain, from the service configuration interface, the service feature information entered by the user. Optionally, the cloud platform can further obtain identity information of the user that deploys the service node. In an implementation, the service feature information further indicates the user that deploys the service node. For example, the service configuration interface includes content that prompts the user to enter the identity information. After the user enters the identity information in the service configuration interface, the cloud platform may obtain the identity information of the user that instructs to deploy the service node. Alternatively, the service configuration interface does not include content that prompts the user to enter the identity information, but the cloud platform can automatically identify an identity of the user based on an entry operation by the user in the service configuration interface, to obtain the service feature information including the identity information of the user. Alternatively, the cloud service providing request sent by the user to the cloud platform carries the identity information of the user. Alternatively, before sending the cloud service request to the cloud platform, the user sends authentication information to the cloud platform, where the authentication information carries the identity information of the user. In this application, the plurality of service nodes in the cloud service network are optionally deployed by a same user, or are respectively deployed by a plurality of users. When the plurality of service nodes in the cloud service network are deployed by different users, the cloud service network may be considered as supporting cross-account access.

Step 307: The cloud platform deploys the service node based on an indication of the service feature information by using all the first resource sets.

After obtaining the service feature information, the cloud platform may deploy the service node based on all the first resource sets indicated by the service feature information. In an implementation, a process of deploying the service node is actually deploying an instance (for example, inserting a network interface card into the instance) used to run an application for implementing the service node, and deploying a related device needed by the instance to provide a service. The related device is configured to forward a data packet between nodes for transmitting the data packet with the service node. For example, the related device is a NAT gateway or an elastic load balance (elastic load balance, ELB) gateway.

It can be learned from the foregoing descriptions that the user can indicate, by using the resource feature information, the listening protocol used for the service node. In this case, a related function matching the listening protocol used for the service node further needs to be configured for the related device, to support use of the listening protocol. For example, when the service node is a layer 7 application, an ELB gateway of the service node further has a function of supporting access of the layer 7 application.

It can be learned from the foregoing descriptions that the user can indicate, by using the resource feature information, the network protocol used for the first resource set that is used to deploy the service node, and different network protocols are used for a plurality of first resource sets used to deploy a same service node. In this case, the method further includes: The cloud platform deploys a service agent for the service node by using the first resource set used to deploy the service node. The service agent is used to translate an address of a packet sent or received by the service node, so that the service node can support access between applications for which different network protocols are used. In an implementation, when different service nodes in the cloud service network are associated by using a transit network, the service agent is used to: when different network protocols are used for the service node and the transit network, translate a destination address and a source address of a packet transmitted between the service node and the transit network into addresses that comply with a network protocol used for the service node and a receive end in the transit network. Optionally, the service agent is implemented as a NAT gateway or an ELB gateway. For example, when the IPv6 protocol is used for the transit network, and the IPv4 protocol is used for the service node, the ELB gateway of the service node is used as the service agent, and the ELB gateway occupies an IPv6 address in the transit network. When a data packet whose source IP address and destination IP address are both IPv6 addresses needs to be sent to the service node over the transit network, the ELB gateway is used to translate both the source IP address and the destination IP address of the data packet into IPv4 addresses. When a data packet that is from the service node and whose source IP address and destination IP address are both IPv4 addresses needs to be sent to another service node over the transit network, the ELB gateway is used to translate both the source IP address and the destination IP address of the data packet into IPv6 addresses.

The cloud platform deploys the service agent for the service node, and performs automatic network protocol translation by using the service agent, so that the service node can support access between applications for which different network protocols are used, and the service node does not need to be reconstructed. In this way, the cloud service providing method provided in this application can provide a cloud service in a plurality of scenarios, and an application scenario of the cloud service providing method is not limited by a network protocol, to expand an application scope of the cloud service providing method.

It should be noted that the foregoing content is described by using an example in which the user needs to deploy the service node, but an implementation process in which the user does not need to deploy the service node is not excluded. For example, when a service node to be associated with the cloud service network already exists, optionally, the user directly associates the service node with the cloud service network when creating the cloud service network, without deploying the service node. It should be understood that when the user does not need to deploy the service node, step 302 to step 307 do not need to be performed.

Step 308: The cloud platform provides a network configuration interface for a user, where the network configuration interface prompts the user to enter network feature information, and the network feature information indicates a cloud service network that implements a target cloud service.

In this application, the cloud platform can provide the network configuration interface for the user, to prompt the user to enter the network feature information, so that the cloud platform creates the cloud service network based on the network feature information. Creating the cloud service network is to create a public platform that can provide a cloud service, excluding creating a service node used to provide a service. In an implementation, the network feature information optionally includes a name of the cloud service network, and the name indicates the cloud service network. The network configuration interface further prompts the user to enter all resource deployment regions covered by the cloud service network. Alternatively, the network configuration interface does not prompt the user to enter a resource deployment region covered by the cloud service network. In this case, optionally, the resource deployment region covered by the cloud service network is automatically determined based on resource deployment regions of a plurality of service nodes associated with the cloud service network. Optionally, the network configuration interface further prompts the user to enter all the service nodes associated with the cloud service network.

It should be noted that the user instructing to deploy the cloud service network is optionally the same as or different from a user instructing to deploy all the service nodes in the cloud service network. For example, a management department of a company instructs to deploy the cloud service network, and a plurality of business departments of the company separately instruct to deploy the plurality of service nodes. When the user instructing to deploy the cloud service network is different from the user instructing to deploy all the service nodes in the cloud service network, the cloud service network may be considered as supporting cross-account access.

Step 309: The cloud platform obtains the network feature information from the network configuration interface.

After the user enters the network feature information in the network configuration interface, the cloud platform may obtain, from the network configuration interface, the network feature information entered by the user.

Step 310: The cloud platform provides a network association interface for the user, where the network association interface prompts the user to enter association information, and the association information indicates a plurality of service nodes associated with the cloud service network.

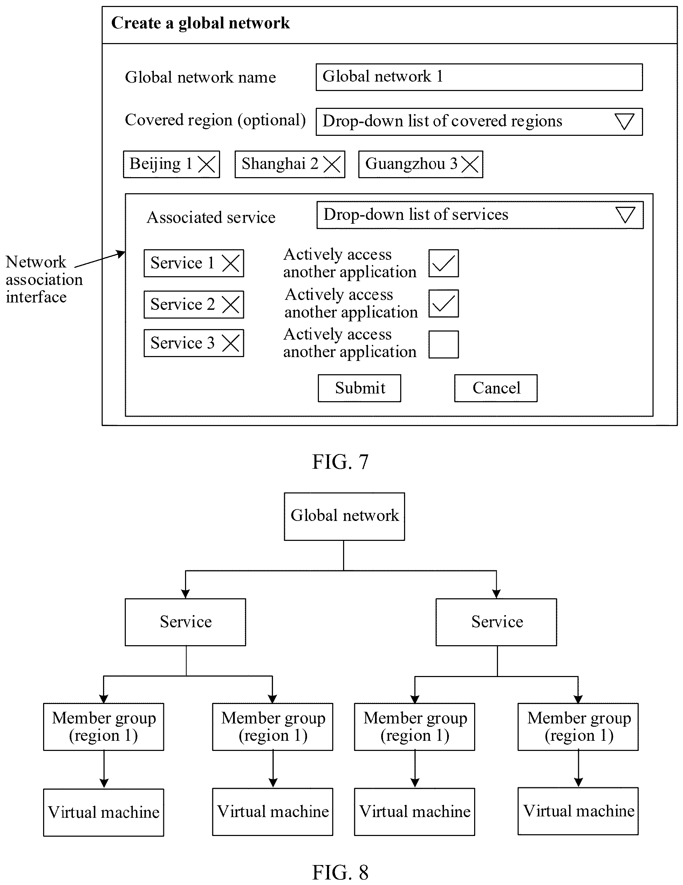

In this application, the cloud platform can provide the network association interface for the user, to prompt the user to enter the association information, so that the cloud platform associates the plurality of service nodes based on the association information, to obtain the cloud service network including the plurality of service nodes. The association information indicates the plurality of service nodes associated with the cloud service network. In an implementation, the network association interface is optionally a separate interface or a part of another interface. For example, after providing the service configuration interface and the network configuration interface for the user, the cloud platform further provides the separate network association interface for the user, to prompt the user to enter the association information in the separate network association interface. Alternatively, when the service configuration interface can prompt the user to enter the cloud service network associated with the service nodes, a small interface that plays a prompt role in the service configuration interface may be referred to as a network association interface, that is, the network association interface is a part of the service configuration interface. Alternatively, when the network configuration interface can prompt the user to enter all the service nodes associated with the cloud service network, a small interface that plays a prompt role in the network configuration interface may be referred to as a network association interface, that is, the network association interface is a part of the network configuration interface. For example, FIG. 7 is a diagram in which a network association interface is a part of a network configuration interface according to an embodiment of this application.

Step 311: The cloud platform obtains the association information from the network association interface.

After the user enters the association information in the network association interface, the cloud platform may obtain, from the network association interface, the association information entered by the user.

Step 312: The cloud platform establishes an association relationship between the plurality of service nodes based on the network feature information and the association information, to obtain the cloud service network.

After obtaining the network feature information, the cloud platform may create a public platform that is indicated by the network feature information and that can provide a cloud service. After obtaining the association information, the cloud platform may establish, on the public platform, the association relationship between the plurality of service nodes indicated by the association information, to obtain the cloud service network. Establishing the association relationship between the plurality of service nodes is actually to establish connections for access between the plurality of service nodes in the cloud service network. Optionally, an implementation process is as follows: The cloud platform creates a transit network based on the network feature information and the association information, and associates the plurality of service nodes with the transit network, to obtain the cloud service network. In addition, when the cloud service network is deployed across resource deployment regions, the transit network needs to associate service nodes deployed across resource deployment regions. In an implementation, the association means that an address is allocated to a service node from the transit network, the address is bound to the service node, and the address is used as an access portal of the service node. For example, when a service agent (for example, an ELB gateway) is configured for the service node, the association process is actually allocating an address to the service agent and binding the address to the service agent. For example, when the IPv6 protocol is used for the transit network, in a process of associating a service node 2 with a service node 3, the cloud platform allocates an IPv6 address, namely, 2001:db8:1234:1d02::a, to ELB1 corresponding to the service node 2, and allocates an IPv6 address, namely, 2001:db8:1234:1b03::b, to ELB2 corresponding to the service node 3. Optionally, the transit network is optionally implemented as cloud connect, an SD-WAN, or the like. That the plurality of service nodes are associated by using the transit network is an example. A person skilled in the art should know that the function can be implemented in other manners, and implementations are not enumerated one by one in embodiments of this application.

In addition, when a cloud service node is deployed based on a public network resource, optionally, the cloud platform directly uses a service created on the public network to create the cloud service network. During service node association, the cloud platform needs to associate the created service with another service node in the cloud service network. When the cloud service network is created based on a self-owned resource, optionally, the cloud platform directly uses a service created on the self-owned resource to create the cloud service network. During service node association, the cloud platform needs to associate the created service with another service node in the cloud service network.

Optionally, the transit network is further used to translate addresses of the plurality of service nodes. Because access between different service nodes in the cloud service network needs to be over the transit network, the transit network may obtain addresses of all the service nodes in the cloud service network, and when addresses of different service nodes conflict, the transit network uniformly allocates addresses to these service nodes, and translate the addresses of the service nodes into a unique address in the cloud service network, so that an address conflict of the service nodes does not occur. For example, when the IPv4 protocol is used for the plurality of service nodes in the cloud service network, addresses of some service nodes conflict. The transit network translates addresses of the some service nodes, so that the addresses of the service nodes can be uniformly planned, thereby resolving an IPv4 protocol address conflict of the plurality of service nodes. In this way, the cloud service network can resolve an IPv4 address conflict and address space insufficiency, so that the user does not need to plan network and address space, to further enhance availability of a cloud service provided by the cloud platform.

In addition, during creation of the cloud service network, optionally, a domain name server is further created in the cloud service network, to prevent an IP address of a service node from being exposed. The domain name server automatically configures domain name resolution in a DNS of a VPC 1 for an application 1: app2.com:192.18.0.2 and app3.com:192.18.0.3. After deploying a service node, the cloud platform allocates a domain name to the service node. For example, the cloud platform allocates a domain name app2.com to a service node App 2, and allocates a domain name app3.com to a service node App 3. Then, the cloud platform creates a domain name mapping table in the domain name server, where the domain name mapping table records a correspondence between a domain name and an IP address of a service node in the cloud service network. The domain name server is configured to perform domain name resolution based on the domain name mapping table. For example, an IP address corresponding to app2.com is 192.18.0.2, and an IP address corresponding to app3.com is 192.18.0.3. When receiving a domain name resolution request carrying the domain name app2.com, the domain name server can learn, based on the domain name mapping table, that the corresponding IP address is 192.18.0.2. In addition, when a domain name mapping relationship of the service node changes, the domain name mapping table needs to be correspondingly updated. In addition, the cloud platform may create a domain name server for each virtual local area network, and the domain name server is responsible for a domain name resolution task in the virtual local area network.

Based on the above, it can be learned that an application-oriented network model is provided in embodiments of this application. The network model includes a resource layer, a service node layer, and a cloud service network layer. Based on existence of the network model, when the user needs the cloud platform to provide a cloud service for the user, the cloud platform needs to provide the resource configuration interface, the service configuration interface, the network configuration interface, and the network association interface for the user, to obtain related information entered by the user, and perform a related operation based on the information entered by the user, so that a cloud service network used to provide the cloud service needed by the user can be obtained, and the cloud service network is used to provide the cloud service for the user. In this way, in a process of providing the cloud service, the user does not need to perform complex network configuration. This reduces difficulty of the user in using the cloud service provided by the cloud platform, and helps enhance availability of the cloud service provided by the cloud platform.

As shown in FIG. 8, the network model includes the following three layers: a cloud service network, a service node, and a first resource set. FIG. 8 is a diagram in which a cloud service network is a global network, a service node is a service, and a first resource set is a member group. Main features of the network model are shown in Table 1.

**Table 1**

| Model/Object | Descriptions |
|---|---|
| Cloud service network | The cloud service network is an application-oriented global network model and has the following features: |
| | The cloud service network supports associated access of service nodes across accounts and virtual local area networks, and supports associated access of applications in different resource deployment regions. |
| | The cloud service network supports associated access of L4 and L7 applications simultaneously. |
| | The cloud service network has multiple network planes, and a same service node can access a plurality of cloud service networks. |
| Service node | The service node represents an independent application, each service node may publish a service on a plurality of cloud service networks, and each service node may be bound to a plurality of first resource sets. |
| | The service node includes a listener attribute or object and a rule attribute or object, and can define different layer 4 and layer 7 traffic diversion policies to the first resource sets at the backend. |
| First resource set | The first resource set represents a logical concept of resources in a same resource deployment region. Each service node may be bound to a plurality of first resource sets. The first resource set is a logical group including compute instances of a same type in a resource deployment region, for example, a virtual machine, a container, a function, or a bare metal server, or may be a heterogeneous logical group including compute instances of a plurality of types, for example, one or more of a virtual machine, a container, a function, and a bare metal server. FIG. 8 is a diagram in which a first resource set is a logical group including virtual machines in a resource deployment region. |
| | When the first resource set is created, a network configuration, for example, a virtual local area network, is automatically created, and the user only needs to specify that the first resource set is used to deploy a service node, that is, specify that an application of the service node is deployed on a compute resource corresponding to the first resource set. Alternatively, when the first resource set is created, an inventory virtual local area network is selected, and a group of compute resources on which an application is deployed in the virtual local area network is selected, to form the first resource set. |
| | The first resource set has a region attribute. To be specific, when all first resource sets associated with a service node are in a resource deployment region, the service node is a region-level application. When all first resource sets associated with a service node cross a plurality of resource deployment regions, the service node is a global application, where the resource deployment regions respectively correspond to a public network resource, a cloud resource in a cloud resource deployment region, and a self-owned resource of the user. For example, the resource deployment regions are respectively region, Internet, and IDC. |

Optionally, the user may further deploy a client in the cloud service network. The client may be deployed in a plurality of modes. Descriptions are given below by using three deployment modes as an example.

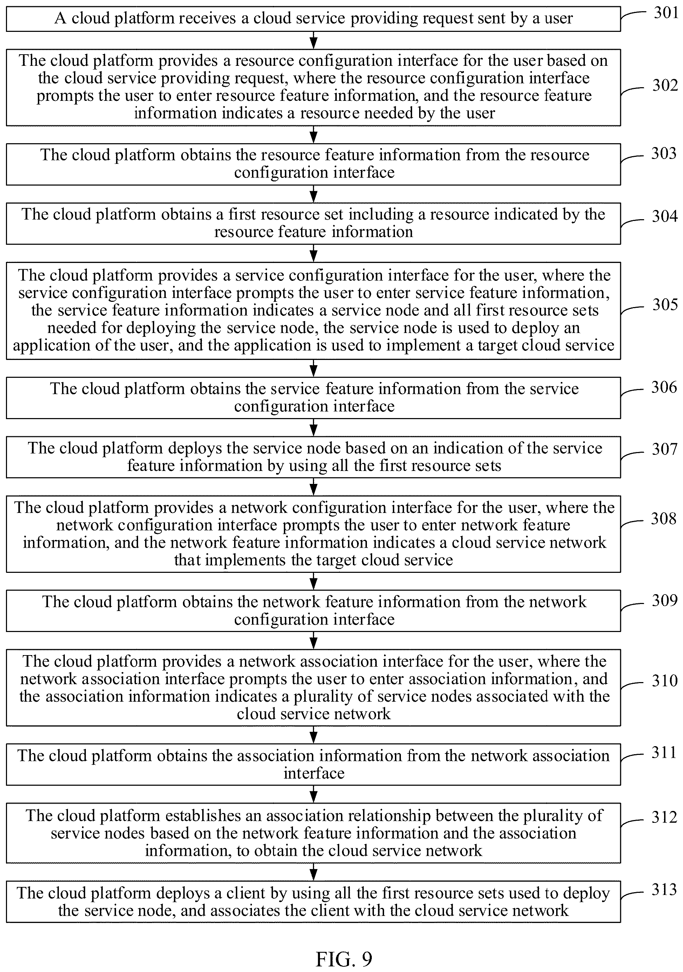

In a first implementation, the service configuration interface or the network configuration interface further prompts the user to select whether a service node is reused as a client, and the service feature information or the network configuration information further indicates that the specified service node is reused as the client. In this case, the service node is the same as a cloud service network associated with the client obtained by reusing the service node. As shown in FIG. 9, the method further includes step 313: The cloud platform deploys the client by using all the first resource sets used to deploy the service node, and associates the client with the cloud service network. For example, as shown in FIG. 7, after each service node, an option for selecting whether the service node "actively accesses another application" is further configured. The option is not selected when the user does not need to reuse the service node as a client. The option is selected when the user needs to reuse the service node as a client. In this case, the network configuration information further indicates that the service node is reused as a client. It can be learned, based on the network feature information currently entered in the network configuration interface in FIG. 7, that service nodes, namely, a service 1 and a service 2 are reused as clients, and a service 3 is not reused as a client. After obtaining the network feature information, the cloud platform may deploy a client 1 based on all first resource sets used to deploy the service node, namely, the service 1, and associate the client 1 with the cloud service network; and the cloud platform may deploy a client 2 based on all first resource sets used to deploy the service node, namely, the service 2, and associate the client 2 with the cloud service network. A process of creating the client is actually deploying an instance used to run an application for implementing the client and deploying a related device needed for access by the instance. The related device is configured to forward a data packet between nodes for transmitting the data packet with the client. For example, the related device is a NAT gateway or the like, and the NAT gateway is configured to proxy the service node to a local network segment of the client, for example, 198.18.0.0/15. In addition, when the first resource set is presented as a virtual local area network, if a resource used to deploy the service node includes a plurality of virtual local area networks, when a device like a NAT gateway is created for the client, the device like a NAT gateway needs to be created for each virtual local area network. Associating the client with the cloud service network is actually binding the client to the cloud service network. For an implementation of associating the client to the cloud service network, refer to the implementation of associating the service node with the cloud service network. Details are not described herein again.

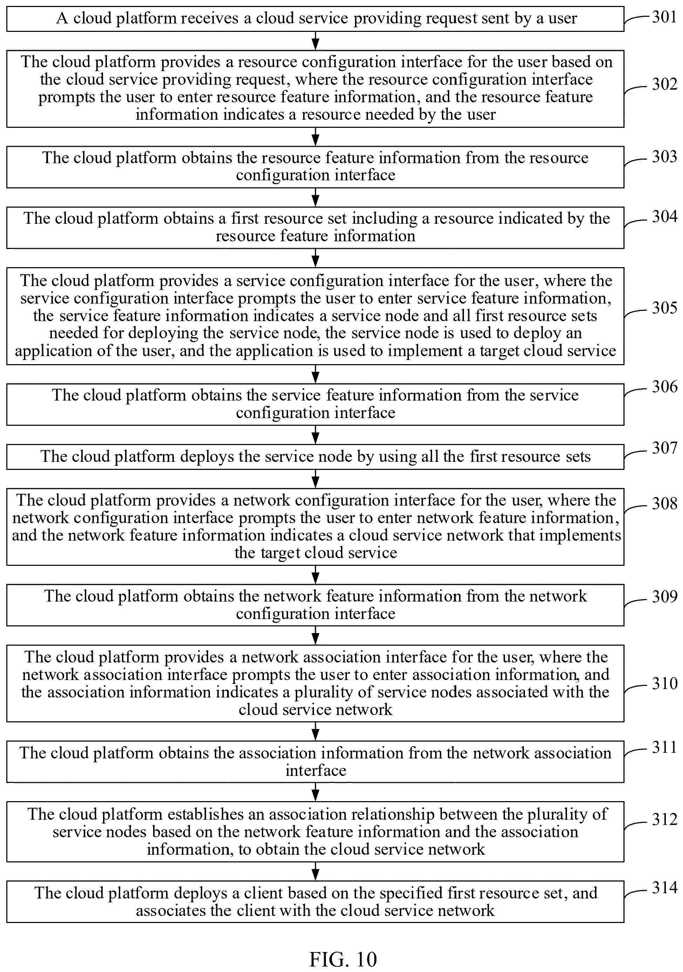

In a second implementation, the service configuration interface or the network configuration interface further prompts the user to enter whether any first resource set in all the first resource sets used to deploy the service node is further used to deploy the client, and the service feature information or the network configuration information further indicates that the specified first resource set is further used to deploy the client. In this case, the client is the same as a cloud service network associated with the specified first resource set. As shown in FIG. 10, the method further includes step 314: The cloud platform deploys the client based on the specified first resource set, and associates the client with the cloud service network. For example, the service feature information further indicates that a VPC 1 of the first resource set is further used to deploy the client. After obtaining the service feature information, the cloud platform may deploy a client 1 based on the VPC 1 used to deploy the service node, namely, the service 1, and associate the client 1 with the cloud service network. For an implementation, refer to the related descriptions in the first implementation of the client. Details are not described herein again.

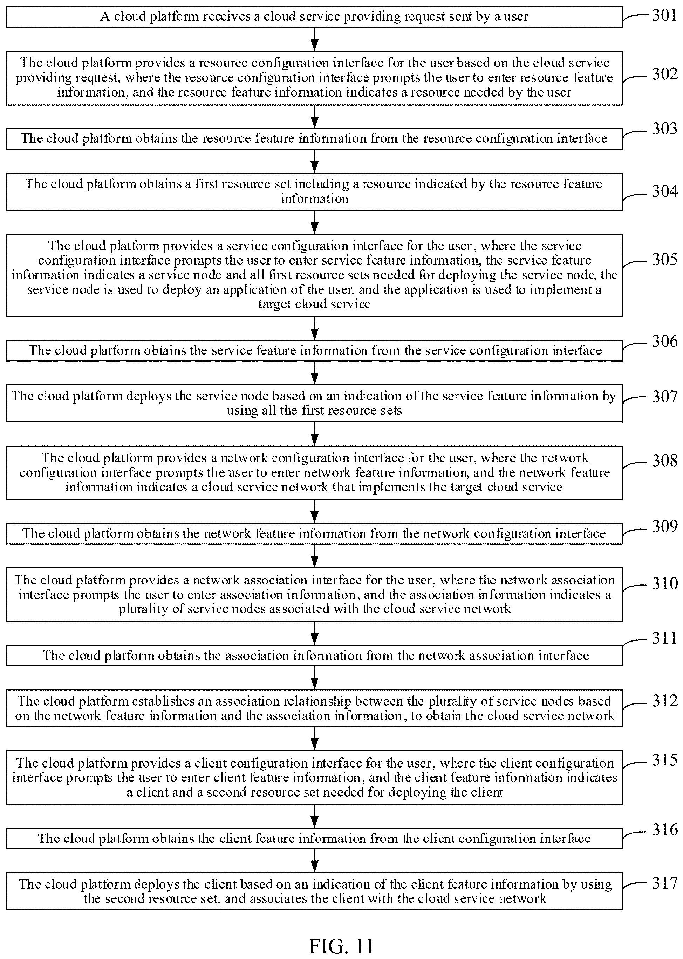

In a third implementation, as shown in FIG. 11, the method further includes step 315: The cloud platform provides a client configuration interface for the user, where the client configuration interface prompts the user to enter client feature information, and the client feature information indicates a client and a second resource set needed for deploying the client. Step 316: The cloud platform obtains the client feature information from the client configuration interface. Step 317: The cloud platform deploys the client based on an indication of the client feature information by using the second resource set, and associates the client with the cloud service network.

In this application, the cloud platform can provide the client configuration interface for the user, to prompt the user to enter the client feature information, so that the cloud platform creates the client in the cloud service network based on the client feature information. The client feature information indicates the client and all second resource sets needed for deploying the client. In an implementation, the client configuration interface prompts the user to enter a name of the client and names of all the second resource sets needed for deploying the client, so that the client is identified by using the name of the client, and the second resource sets needed for deploying the client are identified by using the names of the second resource sets. Correspondingly, the client feature information carries the name of the client and the names of all the second resource sets needed for deploying the client.

In an implementation, the client is optionally deployed based on a resource in one or more resource deployment regions. For example, the client meets one or both of the following: The client is deployed based on cloud resources in different cloud resource deployment regions on the cloud platform; and the client is deployed based on at least two of a public network resource, a cloud resource in a cloud resource deployment region, and a self-owned resource of the user. In this case, because the client is not limited to being deployed based on a resource in a specific resource deployment region, it can be learned that the client can implement access by using the resources deployed in the plurality of resource deployment regions, and the client may be considered as a global client. When the user wants to deploy the global client, the user needs to indicate, in the client configuration interface, a plurality of second resource sets used to deploy the client, to transfer, to the cloud platform, the client feature information indicating that the client is deployed based on the plurality of second resource sets. All resources in any second resource set are deployed in a same resource deployment region.

In addition, the client configuration interface further prompts the user to enter a cloud service network associated with the client, and the client feature information further indicates the cloud service network associated with the client. Optionally, one client can be associated with one or more cloud service networks, and the plurality of cloud service networks are used to carry different cloud services. When an application requirement requires that a client be associated with a plurality of cloud service networks, the user optionally enters, in the client configuration interface, all the cloud service networks associated with the client.

In the third implementation, the user instructing to deploy the client is optionally the same as or different from the user instructing to deploy the cloud service network and the user instructing to deploy the service node. This is not specifically limited in this embodiment of this application. This implementation is equivalent to that a second resource set (for example, a virtual local area network) that is not bound to any client is used as a client for binding. When the client is deployed based on a virtual local area network of a resource set in this implementation, a device like a NAT gateway needs to be created for each virtual local area network when the device like a NAT gateway is created for the client.

When the cloud service network further includes the client, a same network protocol or different network protocols are optionally used for a resource set used to deploy the client and a resource set used to deploy the service node. In this case, the cloud service network supports access of applications for which different network protocols are used. In an implementation, the method further includes: The cloud platform deploys a client agent for the client by using the resource set used to deploy the client. The client agent is used to translate an address of a packet sent or received by the client, so that the client can access applications for which different network protocols are used. In an implementation, when the service node in the cloud service network and the client are associated by using a transit network, the client agent is used to: when different network protocols are used for the client and the transit network that is in the cloud service network, translate a destination address and a source address of a packet transmitted between the client and the transit network into addresses that comply with a network protocol used for the service node and a receive end in the transit network. Optionally, the client agent is implemented as a NAT gateway. In this way, when the IPv4 protocol is used for a part of service nodes in the cloud service network, and the IPv6 protocol is used for a part of the service nodes, translation between an IPv4 address and an IPv6 address can be implemented by the client agent, so that the cloud service network supports access of application for which different network protocols are used. For example, when the IPv4 protocol is used for the second resource set used to deploy the client, and the IPv6 protocol is used for the transit network, both a source IP address and a destination IP address of a data packet passing through a NAT gateway of the client are translated from IPv4 addresses into IPv6 addresses.

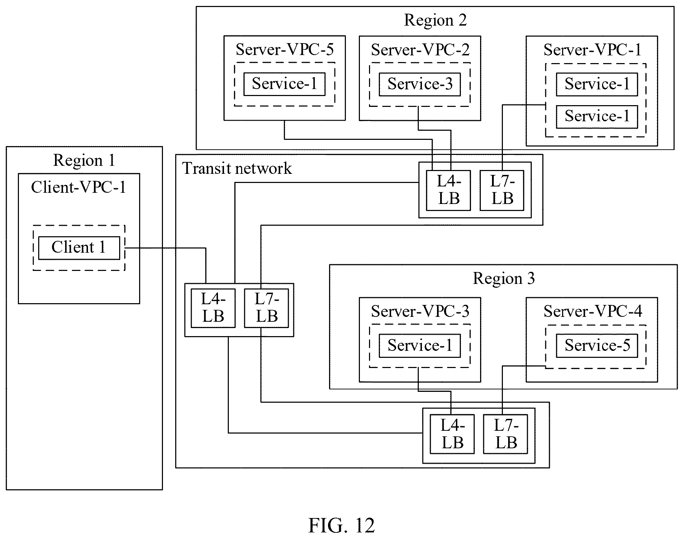

In addition, when the cloud service network further includes the client, in an implementation of supporting access between applications for which different listening protocols are used, the method further includes: The cloud platform deploys a second client agent and a third client agent for the client by using the resource set used to deploy the client. The second client agent is used to: when the client sends a packet for which a first listening protocol is used, forward the packet to a destination end of the packet according to the first listening protocol; or when the client sends a packet for which a second listening protocol is used, forward the packet to the third client agent. The third client agent is used to forward the packet to the destination end of the packet according to the second listening protocol. In a possible implementation, as shown in FIG. 12, the second client agent is a client agent supporting access to a layer 4 application (referred to as a layer 4 agent for short, for example, an L4-LB in FIG. 12), and the third client agent is a client agent supporting access to a layer 7 application (referred to as a layer 7 agent for short, for example, an L7-LB in FIG. 12). The layer 4 agent forwards a packet by using layer 4 information (for example, an IP address and a port). The layer 7 agent forwards a packet by using layer 7 information (for example, a uniform resource locator (Uniform Resource Locator, URL) and a tag), and the layer 4 agent cannot obtain the layer 7 information. When the client accesses the layer 4 application, a packet sent by the client is a layer 4 packet. In this case, the layer 4 agent can obtain layer 4 information from the packet, and forward the packet to a destination end of the packet according to a listening protocol used for the layer 4 application. When the client accesses the layer 7 application, a packet sent by the client is a layer 7 packet. The layer 4 agent cannot obtain layer 7 information from the packet. In this case, after receiving the packet, the layer 4 client forwards the packet to the layer 7 agent. After receiving the packet, the layer 7 agent obtains the layer 7 information from the packet, and forwards the packet to a destination end of the packet based on the layer 7 information and according to a listening protocol used for the layer 7 application. In this way, the cloud service network can support access between layer 4 and layer 7 applications.

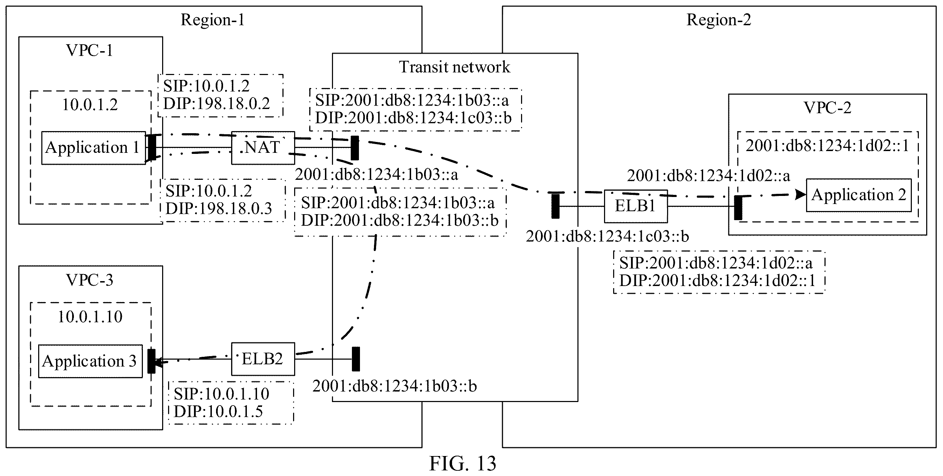

FIG. 13 is a diagram of a structure of a cloud service network according to an embodiment of this application. As shown in FIG. 13, an application 1 is deployed as a client on a VPC-1 in a region 1 and actively accesses an application 2 and an application 3. The application 2 is deployed on a VPC-2 in a region 2, and provides a service by using an IPv6 protocol. A domain name of the application 2 is app2.com. The application 3 is deployed on a VPC-3 in the region 1, and provides a service by using an IPv4 protocol. An address of the VPC-3 conflicts with an address of the VPC-1 of the application 1. A domain name of the application 3 is app3.com. The application 1, the application 2, and the application 3 are associated over a transit network, and the IPv6 protocol is used for the transit network. It can be learned that the cloud service network crosses regions, supports access between IPv4 and IPv6 applications, and involves three applications. The cloud service network further includes a DNS application, a NAT gateway, an ELB1 gateway, and an ELB2 gateway. The DNS application is used to perform domain name resolution on the application 1. The NAT gateway is used to perform source/destination network address translation on the application 1, and perform address translation based on a network used for the application 1 and a network used for the transit network. The ELB1 gateway is responsible for forwarding traffic of the application 2, and performing address translation based on a network used for the application 2 and the network used for the transit network. The ELB2 gateway is responsible for forwarding traffic of the application 3, and performing address translation based on a network used for the application 3 and the network used for the transit network. An IPv4 address of the application 1 is 10.0.1.2. An IPv6 address of the application 2 is 2001:db8:1234:1d02::1. An IPv4 address of the application 3 is 10.0.1.10. An IPv6 address of the transit network bound to the NAT gateway is 2001:db8:1234:1b03::a. An IPv6 address of the transit network bound to the ELB1 gateway is 2001:db8:1234:1c03::b. An IPv6 address of the transit network bound to the ELB2 gateway is 2001:db8:1234:1b03::b.

When the application 1 accesses the application 2, the domain name app2.com of the application 2 is resolved to 192.18.0.2 through a private network DNS. A source IP (SIP) of a data packet for accessing the application 2 by the application 1 is 10.0.1.2, and a destination IP (DIP) is 198.18.0.2. The data packet is forwarded to the NAT gateway via a route on the VPC-1. The NAT gateway performs FullNAT on the data packet based on a configuration of a cloud platform, and translates, through DNAT, the destination IP into 2001:db8:1234:1c03::b to which ELB1 is bound. The data packet is routed to the ELB1 gateway in the region 2 over the transit network. The ELB1 gateway forwards the data packet to the application 2 at the backend in a load balancing mode. In FIG. 13, an arrow with a dotted line represents a traffic direction during access, and addresses in boxes with the dotted line represent the source IP and the destination IP of the data packet.

When the application 1 accesses the application 3, the domain name app3.com of the application 3 is resolved to 192.18.0.3 through a private network DNS. A source IP (SIP) of a data packet for accessing the application 3 by the application 1 is 10.0.1.2, and a destination IP (DIP) is 192.18.0.3. The data packet is forwarded to the NAT gateway via a route on the VPC-1. The NAT gateway performs FullNAT on the data packet based on a configuration of a cloud platform, and translates, through DNAT, the destination IP into 2001:db8:1234:1b03::b to which ELB2 is bound. The data packet is routed to the ELB2 gateway in the region 1 over the transit network. The ELB2 gateway forwards the data packet to the application 3 at the backend in a load balancing mode. In FIG. 13, an arrow with a double dotted line represents a traffic direction during access, and addresses in boxes with the double dotted line represent the source IP and the destination IP of the data packet.

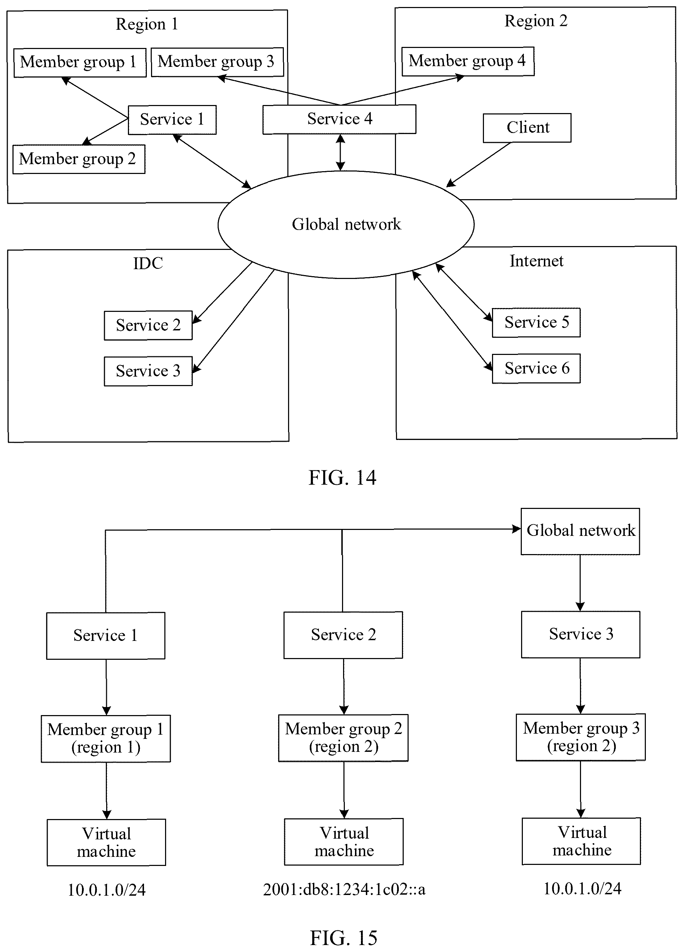

FIG. 14 shows the cloud service network created according to the foregoing steps. As shown in FIG. 14, the cloud service network is associated with six service nodes, and these service nodes correspond to different scenarios, including cross-region, IDC, and Internet. The cloud service network interconnects these heterogeneous service nodes, and a customer does not need to be aware of details. In addition, both a layer 4 application and a layer 7 application are allowed to publish services on the cloud service network.

A service node 1 is deployed on a public cloud and is a region-level layer 4 application. The service node 1 includes two types of computational power that is in the region 1 and for which different IP protocols are used: a member group 1 for which the IPv4 protocol is used and a member group 2 for which the IPv6 protocol is used. The service node 1 serves as both a service provider and a service consumer of another service node on the cloud service network. A service node 2 and a service node 3 are deployed in a customer's equipment room IDC, and serve only as service providers. A service node 4 is deployed on a public cloud and is a global layer 7 application. The service node 4 includes cross-region computational power: a member group 3 in the region 1 and a member group 4 in the region 2. A service node 5 and a service node 6 are deployed on the Internet, and serve as both service providers and service consumers of another service node on the cloud service network.

A type of the cloud service network and a process of creating the cloud service network by the cloud platform are described below by using several scenarios of the cloud service network as an example.

A first scenario relates to access between cross-region applications, that is, a plurality of service nodes in the cloud service network are deployed in different regions. The cloud service network is a global network across regions. The user can use the global network to implement access between applications. FIG. 15 is a diagram of a cloud service network according to an embodiment of this application. As shown in FIG. 15, the cloud service network involves three service nodes, and the three service nodes are implemented as different applications. A process of creating the cloud service network includes S11 to S13 below.

S11: Create a member group for an application and configure a service object based on an instruction of a user, where an implementation process includes:
creating a member group 1 and a service 1 in a region 1, specifying a member group type as IPv4, configuring an HTTP port 8090 of a listener, and configuring a rule to route 100% of traffic to the member group 1;
creating a member group 2 and a service 2 in a region 2, specifying a member group type as IPv6, configuring an HTTP port 8090 of a listener, and configuring a rule to route 100% of traffic to the member group 2; and
creating a member group 3 and a service 3 in the region 3, specifying a member group type as IPv4, configuring an HTTP port 8090 of a listener, and configuring a rule to route 100% of traffic to the member group 3.

S12: Deploy an application backend based on an instruction of a user, where an implementation process includes:
specifying the member group 1 to purchase a group of virtual machines in the region 1, deploying an application of the service 1 on the virtual machines, and configuring the application to listen to the HTTP port 8090;
specifying the member group 2 to purchase a group of virtual machines in the region 2, deploying an application of the service 2 on the virtual machines, and configuring the application to listen to the HTTP port 8090; and
specifying the member group 3 to purchase a group of virtual machines in a region 3, deploying an application of the service 3 on the virtual machines, and configuring the application to listen to the HTTP port 8090.

Note: The three services are deployed and published by using specified member groups. VPCs and subnets for deploying the services are automatically created, of which a customer does not need to be aware. The application of the service 2 publishes a service by using IPv6.

S13: Create a cloud service network object based on an instruction of the user, and associate the cloud service network object with a related service publishing service, where an implementation process includes:
creating the cloud service network object and associating the cloud service network object with the service 1, the service 2, and the service 3 separately; and selecting "actively access another application" when the cloud service network object is associated with the service 1 and the service 2, so that the service 1 and the service 2 can actively access the service 3.

After the foregoing configuration is completed, the service 1 can actively access the service 3, and the cloud service network automatically resolves a IPv4 address conflict; and the service 2 can actively access the service 3, and the cloud service network automatically resolves differentiated access between the IPv4 and IPv6 protocols.

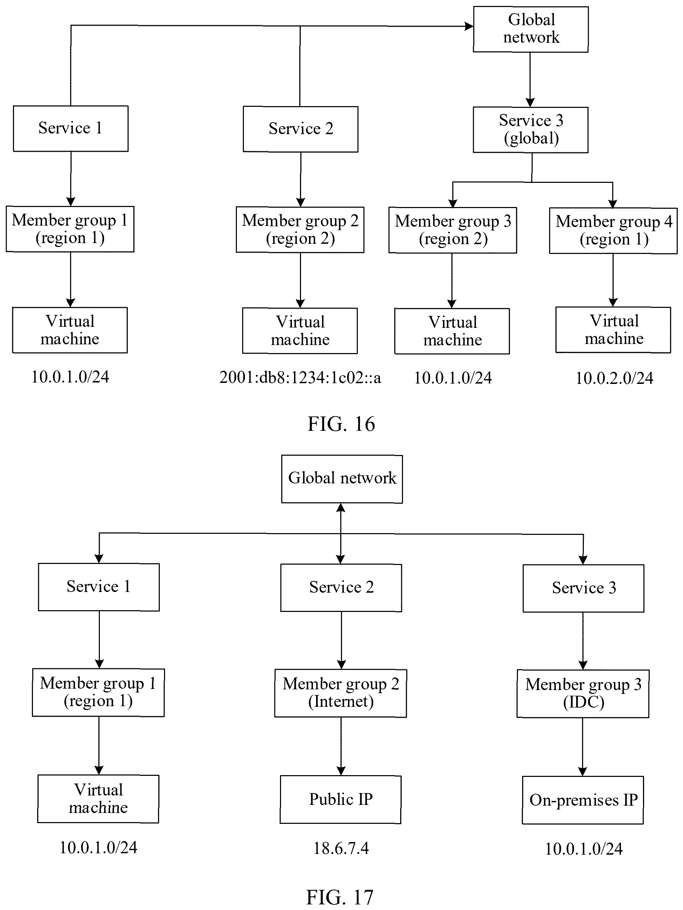

A second scenario relates to a cross-region global application, that is, at least one service node in the cloud service network is deployed in a different region. The cloud service network is a cross-region global network, and the service node is a cross-region global application. The user can use the global network to implement access between applications. FIG. 16 is a diagram of a cloud service network according to an embodiment of this application. As shown in FIG. 16, the cloud service network involves three service nodes, and the three service nodes are implemented as different applications. The cloud service network may be reconstructed based on the cloud service network in the first scenario, a backend member group is added for the service 3 and a service is provided for the service 3 by using a virtual machine deployed in advance in the region 1, and the service 3 is reconstructed into a global application. A process of completing the foregoing requirement includes S21 and S22 below.

S21: Purchase a virtual machine in a region 1 and deploy an application of the service 3 based on an instruction of a user, where an implementation process includes:
purchasing a group of virtual machines on a VPC 4 in the region 1 and deploying the application of the service 3, where a subnet of the VPC 4 is 10.0.2.0/24; and configuring the application of the service 3 to listen to an HTTP port 8090.

S22: Create a member group for the service 3 and configure a service object based on an instruction of the user, and reconstruct the service 3 into a global service. An implementation process includes: creating a member group 4 in the region 1, specifying a member group type as IPv4, selecting a backend type as a virtual machine, selecting an existing virtual machine related to the service 3 on the VPC 4, configuring to bind the member group 4 to the service 3, and configuring a rule to route 50% of traffic to a member group 3 and 50% of traffic to the member group 4.

After the foregoing configuration is completed, the member group 3 and the member group 4 bound to the service 3 are in different regions, and the service 3 publishes services in a plurality of regions. When a service 1 actively accesses the service 3, a nearby backend service corresponding to the member group 4 is accessed. When a service 2 actively accesses the service 3, a nearby backend service corresponding to the member group 3 is accessed.

A third scenario relates to a global network across a region, a public network, and a customer's on-premises equipment room, that is, a plurality of service nodes in the cloud service network are deployed in different resource deployment regions. The cloud service network is a global network across a region, a public network, and a customer's on-premises equipment room. The user can use the global network to implement access between applications. FIG. 17 is a diagram of a cloud service network according to an embodiment of this application. As shown in FIG. 17, the cloud service network involves three service nodes, and the three service nodes are implemented as different applications. The three applications are as follows: a service 1 deployed in a region 1, where a subnet 1 at which a virtual machine is located is an IPv4 only subnet, and a network segment is 10.0.1.0/24; a service 2 deployed on the Internet, where a public IP is 18.6.7.4; and a service 3 deployed in a customer's on-premises IDC, where a network segment is 10.0.1.0/24, which conflicts with an address of the network segment of the service 1. The service 1 needs to access the service 2 and the service 3. A process of creating the cloud service network includes S31 to S33 below.

S31: Deploy an application backend based on an instruction of a user, where an implementation process includes:
purchasing a group of virtual machines on a VPC 1 in the region 1 and deploying an application of the service 1, where a subnet of the VPC 1 is 10.0.1.0/24; and configuring the application to listen to an HTTP port 8090; and
deploying an application of the service 3 in a virtual machine of the on-premises IDC, where a network segment of a network interface card of the virtual machine is 10.0.1.0/24; and configuring the application to listen to the HTTP port 8090.

S32: Create a member group for an application and configure a service object based on an instruction of a user, where an implementation process includes:
creating a member group 1 in the region 1, selecting a backend type as a virtual machine, and specifying a related virtual machine on the VPC 1 in the region 1;
creating the service 1, configuring an HTTP port 8090 of a listener, and configuring a rule to route 100% of traffic to the member group 1;
creating a member group 2, selecting a backend type as a public network service, and binding a public IP of the service 2;
creating the service 2, configuring an HTTP port 8090 of a listener, and configuring a rule to route 100% of traffic to the member group 2;
creating a member group 3, selecting a backend type as an on-premises IDC, selecting a direct connect DC or a VPN, and binding an IP of a virtual machine of the on-premises IDC for the service 3; and
creating the service 3, configuring an HTTP port 8090 of a listener, and configuring a rule to route 100% of traffic to the member group 3.

S33: Create a global network based on an instruction of the user, and associate the global network with a related service, where an implementation process includes:
creating the cloud service network object and associating the cloud service network object with the service 1, the service 2, and the service 3 separately; and selecting "actively access another application" when the cloud service network object is associated with the service 1, so that the service 1 can actively access the service 2 and the service 3. The service 2 and the service 3 do not serve as consumers, and therefore, the service 2 and the service 3 do not actively access the service 1.

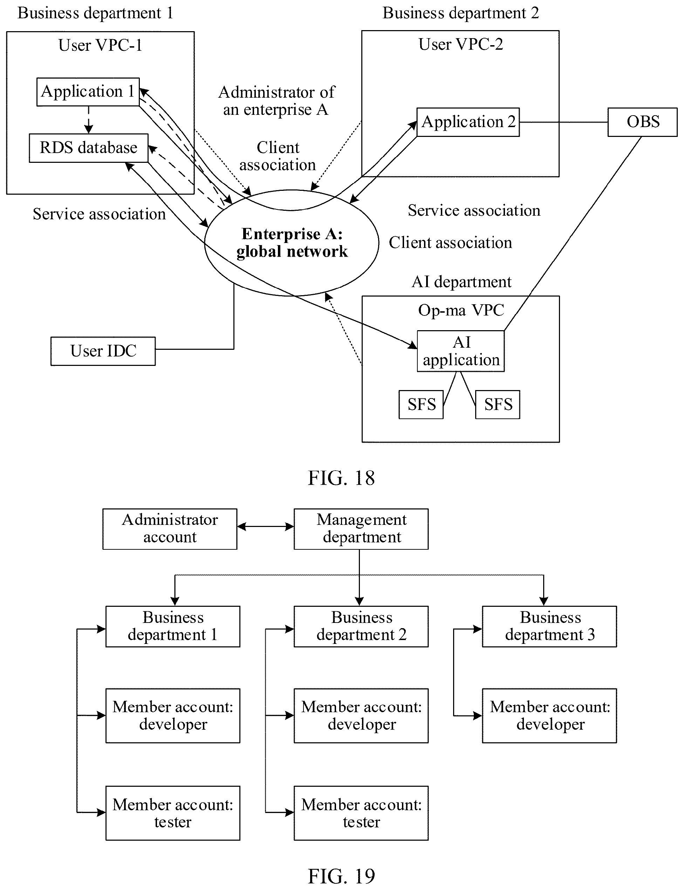

A fourth scenario relates to a global network for cross-account and cross-department collaboration of an enterprise. For example, FIG. 18 is a diagram of a cloud service network according to an embodiment of this application. As shown in FIG. 18, an enterprise A includes three departments: a business department 1, a business department 2, and an AI department. In addition to an administrator account, independent member accounts are created for the departments. FIG. 19 shows relationships between accounts related to the cloud service network. This scenario mainly has the following three application scenarios: an application scenario 1 in which a service 1 operates an RDS database; an application scenario 2 in which the service 1 and a service 2 access each other across departments and VPCs; and an application scenario 3 in which the AI department purchases a public cloud MA to access the RDS database in the business department 1. A process of creating the cloud service network includes S41 to S46 below.

S41: Perform the following operation procedure based on an instruction of the administrator account:
creating the cloud service network;
configuring an access control policy for the cloud service network to allow only access by an account resource in this organization;
sharing the cloud service network with the member accounts of the three departments, public cloud RDS service OP accounts, and public cloud MA service OP accounts of the company, and approving service application after association;
configuring access control to allow resources whose organization is the enterprise and public cloud; and
configuring access control to allow only users vpc-1 and op_ma vpc to access serviceRDS1.

S42: Perform the following operation procedure based on an instruction of a member account in the business department 1:
deploying service code on a compute resource of the user vpc-1;
creating a member group 1 for the compute resource;
creating the service 1, configuring a service routing policy, and associating with the member group 1;
associating the service 1 with the cloud service network and selecting an option "access as a client"; and
purchasing an RDS database service instance rds1 on the public cloud.

S43: Perform the following operation procedure based on an instruction of a member account in the business department 2:
deploying service code on a compute resource of the user vpc-2;
creating a member group 2 for the compute resource;
creating the service 2, configuring a service routing policy, and associating with the member group 2; and
associating the service 2 with the cloud service network, and selecting an option "access as a client".

S44: Perform an operation procedure based on an instruction of a public cloud op_rds account:
using the database instance RDS1 purchased by a customer as a member group and creating a service, namely, serviceRDS1; and
associating serviceRDS1 with the cloud service network.

S45: Perform the following operation procedure based on an instruction of a member account in the AI department:
purchasing a public cloud ModelArts instance ma1 and deploying an AI training task.

S46: Perform the following operation procedure based on an instruction of a public cloud op_ma account:
associating a VPC on which a user instance is located with the cloud service network; and
configuring a security group to allow only a compute resource of the instance ma1 to access.

In conclusion, in the cloud service providing method provided in embodiments of this application, because the plurality of service nodes in the cloud service network are deployed based on the resource in the one or more resource deployment regions, the cloud service network is not limited to being deployed based on a resource in a specific resource deployment region. The cloud service network may be considered as a global network, and can provide a service for the user by using resources deployed in the plurality of resource deployment regions. This expands a range for the cloud service network to provide a cloud service, and enhances performance of the cloud service provided by the cloud service network.

In addition, it can be learned from the cloud service providing method that the method provides an application-oriented network model. The network model includes a resource layer, a service node layer, and a cloud service network layer. Based on existence of the network model, when the user needs the cloud platform to provide a cloud service for the user, the cloud platform needs to provide the resource configuration interface, the service configuration interface, the network configuration interface, and the network association interface for the user, to obtain related information entered by the user, and perform a related operation based on the information entered by the user, so that a cloud service network used to provide the cloud service needed by the user can be obtained, and the cloud service network is used to provide the cloud service for the user. In this way, in a process of providing the cloud service, the user does not need to perform complex network configuration. This reduces difficulty of the user in using the cloud service provided by the cloud platform, and helps enhance availability of the cloud service provided by the cloud platform.

In addition, this application provides an application-oriented network model or object, and supports all-scenario access across resource deployment regions, for example, supports all-scenario access such as region, IDC, and Internet access, and supports access between applications for which different network protocols are used, for example, access between IPv4 and IPv6 applications, and supports access between applications for which different listening protocols are used, for example, access between layer 4 and layer 7 applications, and a customer does not need to reconstruct an application. In addition, this application further supports deployment and publishment of a global application. This helps provide capabilities such as remote multi-active, cross-region flow, and cross-region disaster recovery of the application, so that an application consumer is unaware of global evolution of the application. In addition, this application provides a three-layer network model. When deploying the cloud service network, the user enters related information in a corresponding interface of the three-layer network model, so that the cloud platform can automatically create the cloud service network based on the information. This can greatly simplify global network configuration and management, and provide a capability of one-click automatic interconnection between applications. In addition, the customer does not need to connect networks and plan addresses between applications, and problems such as an IPv4 address conflict and address space insufficiency in a plurality of VPCs can be automatically resolved.

In addition, currently, public cloud vendors generally divide the public cloud into different regions based on geographical locations. Various cloud resources and cloud services are independently deployed in each region. In recent years, with the development of globalization and digitalization, enterprises and organizations need to provide efficient and reliable services and applications in a global range, and cross-region access and global applications gradually become popular. The cloud service providing method provided in embodiments of this application can provide global application deployment and access capabilities. This helps meet requirements of the customer for application expansion, low-latency access, high reliability, low costs, and the like.

It should be noted that a sequence of steps of the cloud service providing method provided in embodiments of this application may be appropriately adjusted, or the steps may be correspondingly added or deleted based on a situation. Any variation method readily figured out by a person skilled in the art within the technical scope disclosed in this application shall fall within the protection scope of this application. Therefore, details are not described herein.

The following describes a virtual apparatus in embodiments of this application by using an example.

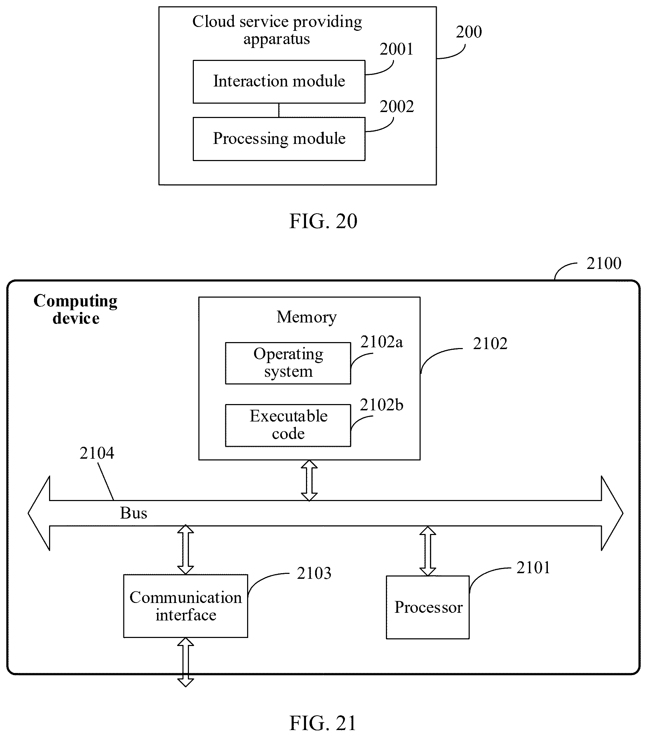

The foregoing describes the cloud service providing method in embodiments of this application. Corresponding to the foregoing method, an embodiment of this application further provides a cloud service providing apparatus. FIG. 20 is a diagram of a structure of a cloud service providing apparatus according to an embodiment of this application. Based on the following a plurality of components shown in FIG. 20, the cloud service providing apparatus shown in FIG. 20 can perform all or some operations in the foregoing cloud service providing method. It should be understood that the apparatus may include more additional components than the shown components, or a part of the shown components may be omitted. This is not limited in embodiments of this application. Optionally, the cloud service providing apparatus may be configured on a cloud platform. As shown in FIG. 20, the cloud service providing apparatus 200 may include:

An interaction module 2001 is configured to provide a network configuration interface for a user, where the network configuration interface prompts the user to enter network feature information, and the network feature information indicates a cloud service network needed for implementing a target cloud service. For a detailed working process of the interaction module 2001, refer to the descriptions in the foregoing method embodiment. For example, refer to the related descriptions of step 308.

The interaction module 2001 is further configured to provide a network association interface for the user, where the network association interface prompts the user to enter association information, the association information indicates a plurality of service nodes associated with the cloud service network, the service node is used to deploy an application of the user, the application is used to implement the target cloud service, and the plurality of service nodes are deployed based on a resource in one or more resource deployment regions. For a detailed working process of the interaction module 2001, refer to the descriptions in the foregoing method embodiment. For example, refer to the related descriptions of step 310.

A processing module 2002 is configured to establish an association relationship between the plurality of service nodes based on the network feature information and the association information, to obtain the cloud service network. For a detailed working process of the processing module 2002, refer to the descriptions in the foregoing method embodiment. For example, refer to the related descriptions of step 311.

Optionally, the plurality of service nodes meet one or both of the following: The plurality of service nodes are deployed based on cloud resources in different cloud resource deployment regions on the cloud platform; and the plurality of service nodes are deployed based on at least two of a public network resource, a cloud resource in a cloud resource deployment region, and a self-owned resource of the user.

Optionally, the service node is deployed based on a resource in one or more resource deployment regions.

Optionally, the service node meets one or both of the following: The service node is deployed based on cloud resources in different cloud resource deployment regions on the cloud platform; and the service node is deployed based on at least two of a public network resource, a cloud resource in a cloud resource deployment region, and a self-owned resource of the user.

Optionally, different listening protocols are used for the plurality of service nodes.

Optionally, different network protocols are used for a plurality of first resource sets used to deploy the service node.

Optionally, different network protocols are used for a plurality of first resource sets used to deploy the plurality of service nodes.

Optionally, the processing module 2002 is further configured to deploy a service agent for the service node, where the service agent is used to: when different network protocols are used for the service node and a transit network in the cloud service network, translate a destination address and a source address of a packet transmitted between the service node and the transit network into addresses that comply with a network protocol used for the service node and a receive end in the transit network, and the transit network is used to associate different service nodes. For a detailed working process of the processing module 2002, refer to the descriptions in the foregoing method embodiment. For example, refer to the related descriptions of step 307.

Optionally, the interaction module 2001 is further configured to provide a service configuration interface for the user, where the service configuration interface prompts the user to enter service feature information, the service feature information indicates all first resource sets needed for deploying the service node, and all resources in any first resource set are deployed in a same resource deployment region; and deploy, through the cloud platform, the service node by using all the first resource sets. For a detailed working process of the interaction module 2001, refer to the descriptions in the foregoing method embodiment. For example, refer to the related descriptions of step 305.

Optionally, the service feature information or the network feature information further indicates that the service node is reused as a client, and the service feature information indicates all the first resource sets needed for deploying the service node; and the processing module 2002 is further configured to deploy the client by using all the first resource sets, and associate the client with the cloud service network. For a detailed working process of the processing module 2002, refer to the descriptions in the foregoing method embodiment. For example, refer to the related descriptions of step 313.

Optionally, the service feature information or the network feature information further indicates that any one of all the first resource sets is further used to deploy a client, and the service feature information indicates all the first resource sets needed for deploying the service node; and the processing module 2002 is further configured to deploy the client by using any first resource set, and associate the client with the cloud service network. For a detailed working process of the processing module 2002, refer to the descriptions in the foregoing method embodiment. For example, refer to the related descriptions of step 314.

Optionally, the interaction module 2001 is further configured to provide a client configuration interface for the user, where the client configuration interface prompts the user to enter client feature information, and the client feature information indicates a client and a second resource set needed for deploying the client. For a detailed working process of the interaction module 2001, refer to the descriptions in the foregoing method embodiment. For example, refer to the related descriptions of step 315.

Correspondingly, the processing module 2002 is further configured to deploy the client by using the second resource set, and associate the client with the cloud service network. For a detailed working process of the processing module 2002, refer to the descriptions in the foregoing method embodiment. For example, refer to the related descriptions of step 317.

Optionally, different network protocols are used for a resource set used to deploy the client and a resource set used to deploy the service node.

Optionally, the processing module 2002 is further configured to deploy a client agent for the client by using the resource set used to deploy the client, where the client agent is used to: when different network protocols are used for the client and the transit network that is in the cloud service network, translate a destination address and a source address of a packet transmitted between the client and the transit network into addresses that comply with a network protocol used for the service node and a receive end in the transit network, and the transit network is used to associate different service nodes. For a detailed working process of the processing module 2002, refer to the descriptions in the foregoing method embodiment.

Optionally, the processing module 2002 is further configured to deploy a second client agent and a third client agent for the client by using the resource set used to deploy the client, where the second client agent is used to: when the client sends a packet for which a first listening protocol is used, forward the packet to a destination end of the packet according to the first listening protocol; or when the client sends a packet for which a second listening protocol is used, forward the packet to the third client agent; and the third client agent is used to forward the packet to the destination end of the packet according to the second listening protocol. For a detailed working process of the processing module 2002, refer to the descriptions in the foregoing method embodiment.

Optionally, the client is associated with a plurality of cloud service networks, and the plurality of cloud service networks are used to implement different cloud services.

Optionally, the plurality of service nodes are respectively deployed by a plurality of users.

Optionally, the cloud service network and the plurality of service nodes are separately deployed by a plurality of users.

Optionally, the service node is associated with a plurality of cloud service networks, and the plurality of cloud service networks are used to implement different cloud services.

Optionally, the processing module 2002 is specifically configured to: create, through the cloud platform, a transit network based on the network feature information and the association information, and associate the plurality of service nodes with the transit network, to obtain the cloud service network. For a detailed working process of the processing module 2002, refer to the descriptions in the foregoing method embodiment. For example, refer to the related descriptions of step 312.

Optionally, the transit network is further used to translate addresses of the plurality of service nodes.

Optionally, the interaction module 2001 is further configured to provide a resource configuration interface for the user based on the cloud service providing request, where the resource configuration interface prompts the user to enter resource feature information, and the resource feature information indicates a resource needed by the user. For a detailed working process of the interaction module 2001, refer to the descriptions in the foregoing method embodiment. For example, refer to the related descriptions of step 302.

The processing module 2002 is further configured to obtain a first resource set including a resource indicated by the resource feature information, where the first resource set is used to create a service node. For a detailed working process of the processing module 2002, refer to the descriptions in the foregoing method embodiment. For example, refer to the related descriptions of step 304.

Optionally, the resource feature information further indicates that a resource is provided in a form of a virtual local area network and indicates a source of the virtual local area network, where the virtual local area network includes a plurality of compute instances having a specified network relationship. The processing module 2002 is specifically configured to: when the resource feature information indicates that the virtual local area network is created based on a resource, create, through the cloud platform, the virtual local area network by using the resource, to obtain the first resource set; and when the resource feature information indicates that an inventory virtual local area network is used, obtain, through the cloud platform, the inventory virtual local area network, to obtain the first resource set. For a detailed working process of the processing module 2002, refer to the descriptions in the foregoing method embodiment. For example, refer to the related descriptions of step 304.

Optionally, the first resource set includes one or more compute instances, and the compute instance includes a virtual machine, a container, a function, and a bare metal server.

In conclusion, in the cloud service providing apparatus provided in embodiments of this application, because the plurality of service nodes in the cloud service network are deployed based on the resource in the one or more resource deployment regions, the cloud service network is not limited to being deployed based on a resource in a specific resource deployment region. The cloud service network may be considered as a global network, and can provide a service for the user by using resources deployed in the plurality of resource deployment regions. This expands a range for the cloud service network to provide a cloud service, and enhances performance of the cloud service provided by the cloud service network.

In addition, it can be learned from the cloud service providing apparatus that the apparatus provides an application-oriented network model. The network model includes a resource layer, a service node layer, and a cloud service network layer. Based on existence of the network model, when the user needs the cloud platform to provide a cloud service for the user, the cloud platform needs to provide the resource configuration interface, the service configuration interface, the network configuration interface, and the network association interface for the user, to obtain related information entered by the user, and perform a related operation based on the information entered by the user, so that a cloud service network used to provide the cloud service needed by the user can be obtained, and the cloud service network is used to provide the cloud service for the user. In this way, in a process of providing the cloud service, the user does not need to perform complex network configuration. This reduces difficulty of the user in using the cloud service provided by the cloud platform, and helps enhance availability of the cloud service provided by the cloud platform.

In addition, this application provides an application-oriented network model or object, and supports all-scenario access across resource deployment regions, for example, supports all-scenario access such as region, IDC, and Internet access, and supports access between applications for which different network protocols are used, for example, access between IPv4 and IPv6 applications, and supports access between applications for which different listening protocols are used, for example, access between layer 4 and layer 7 applications, and a customer does not need to reconstruct an application. In addition, this application further supports deployment and publishment of a global application. This helps provide capabilities such as remote multi-active, cross-region flow, and cross-region disaster recovery of the application, so that an application consumer is unaware of global evolution of the application. In addition, this application provides a three-layer network model. When deploying the cloud service network, the user enters related information in a corresponding interface of the three-layer network model, so that the cloud platform can automatically create the cloud service network based on the information. This can greatly simplify global network configuration and management, and provide a capability of one-click automatic interconnection between applications. In addition, the customer does not need to connect networks and plan addresses between applications, and problems such as an IPv4 address conflict and address space insufficiency in a plurality of VPCs can be automatically resolved.

In addition, currently, public cloud vendors generally divide the public cloud into different regions based on geographical locations. Various cloud resources and cloud services are independently deployed in each region. In recent years, with the development of globalization and digitalization, enterprises and organizations need to provide efficient and reliable services and applications in a global range, and cross-region access and global applications gradually become popular. The cloud service providing apparatus provided in embodiments of this application can provide global application deployment and access capabilities. This helps meet requirements of the customer for application expansion, low-latency access, high reliability, low costs, and the like.

Both the interaction module 2001 and the processing module 2002 may be implemented by software, or may be implemented by hardware. For example, the following uses the interaction module 2001 as an example to describe an implementation of the interaction module 2001. Similarly, for an implementation of the processing module 2002, refer to the implementation of the interaction module 2001.

The module is used as an example of a software functional unit, and the interaction module 2001 may include code run on a compute instance. The compute instance may include at least one of a physical host (a compute device), a virtual machine, and a container. Further, there may be one or more compute instances. For example, the interaction module 2001 may include code run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed on a same virtual private cloud (virtual private cloud, VPC), or may be distributed on a plurality of VPCs. Generally, one VPC is disposed in one region. A communication gateway needs to be disposed on each VPC for communication between two VPCs in a same region and cross-region communication between VPCs in different regions. The VPCs are interconnected through the communication gateway.

As an example of a hardware functional unit, the interaction module 2001 may include at least one compute device, for example, a server. Alternatively, the interaction module 2001 may be a device implemented by using an application-specific integrated circuit (application-specific integrated circuit, ASIC) or a programmable logic device (programmable logic device, PLD), or the like. The PLD may be implemented by using a complex programmable logical device (complex programmable logical device, CPLD), a field-programmable gate array (field-programmable gate array, FPGA), generic array logic (generic array logic, GAL), or any combination thereof.

A plurality of compute devices included in the interaction module 2001 may be distributed in a same region, or may be distributed in different regions. The plurality of compute devices included in the interaction module 2001 may be distributed in a same AZ, or may be distributed in different AZs. Similarly, the plurality of compute devices included in the interaction module 2001 may be distributed on a same VPC, or may be distributed on a plurality of VPCs. The plurality of compute devices may be any combination of compute devices such as a server, an ASIC, a PLD, a CPLD, an FPGA, and GAL.

It should be noted that, in another embodiment, either of the interaction module 2001 and the processing module 2002 may be configured to perform any step in the cloud service providing method. A step implemented by the interaction module 2001 and a step implemented by the processing module 2002 may be specified as required. The interaction module 2001 and the processing module 2002 separately implement different steps in the cloud service providing method, to implement all functions of the cloud service providing apparatus.

It may be clearly understood by a person skilled in the art that, for the purpose of convenient and brief description, for detailed working processes of the foregoing components, refer to corresponding content in the foregoing method embodiments. Details are not described herein again.

The following describes a basic hardware structure in embodiments of this application by using an example.

An embodiment of this application provides a compute device. The compute device is configured to implement some or all functions of the cloud service providing method provided in embodiments of this application, FIG. 21 is a diagram of a structure of a compute device according to an embodiment of this application. As shown in FIG. 21, the compute device 2100 includes a processor 2101, a memory 2102, a communication interface 2103, and a bus 2104. The processor 2101, the memory 2102, and the communication interface 2103 are communicatively connected to each other through the bus 2104.

The processor 2101 may include a general-purpose processor and/or a dedicated hardware chip. The general-purpose processor may include a central processing unit (central processing unit, CPU), a microprocessor, or a graphics processing unit (graphics processing unit, GPU). For example, the CPU is a single-core (single-CPU) processor, or a multi-core (multi-CPU) processor. The dedicated hardware chip is a hardware module capable of performing high-performance processing. The dedicated hardware chip includes at least one of a digital signal processor, an application-specific integrated circuit (application-specific integrated circuit, ASIC), a field-programmable gate array (field-programmable gate array, FPGA), or a network processor (network processor, NP). Alternatively, the processor 2101 may be an integrated circuit chip and has a signal processing capability. In an implementation process, some or all functions of the cloud service providing method in this application may be completed by using an integrated logic circuit of hardware in the processor 2101 or instructions in a form of software.

The memory 2102 is configured to store a computer program, and the computer program includes an operating system 2102a and executable code (namely, program instructions) 2102b. The memory 2102 is, for example, a read-only memory or another type of static storage device that can store static information and instructions, for another example, a random access memory or another type of dynamic storage device that can store information and instructions, for another example, an electrically erasable programmable read-only memory, a compact disc read-only memory or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected executable code in a form of instructions or a data structure and that can be accessed by a computer, but is not limited thereto. For example, the memory 2102 is configured to store an egress queue, and the like. For example, the memory 2102 exists independently, and is connected to the processor 2101 through the bus 2104. Alternatively, the memory 2102 and the processor 2101 are integrated together. The memory 2102 may store executable code. When the executable code stored in the memory 2102 is executed by the processor 2101, the processor 2101 is configured to perform some or all functions of the cloud service providing method provided in embodiments of this application. For an implementation of performing the process by the processor 2101, accordingly refer to related descriptions in the foregoing embodiments. The memory 2102 may further include a software module, data, and the like that are needed by another running process like the operating system.

The communication interface 2103 uses a transceiver module, for example, but not limited to a transceiver, to implement communication with another device or a communication network. For example, the communication interface 2103 may be any one or any combination of the following components with network access functions: a network interface (for example, an Ethernet interface), a wireless network interface card, and the like.

The bus 2104 is any type of communication bus configured to implement interconnection between internal components (for example, the memory 2102, the processor 2101, and the communication interface 2103) in the compute device, for example, a system bus. In this embodiment of this application, an example in which the foregoing components in the compute device are interconnected through the bus 2104 is used for description. Optionally, the foregoing components in the compute device 2100 may be communicatively connected to each other in another connection manner other than the bus 2104. For example, the foregoing components in the compute device 2100 are interconnected through an internal logical interface.

It should be noted that the foregoing plurality of components may be separately disposed on chips independent of each other, or at least some or all of the components may be disposed on a same chip. Whether the components are separately disposed on different chips or integrated and disposed on one or more chips usually depends on a requirement of a product design. Specific implementations of the foregoing components are not limited in embodiments of this application. Descriptions of procedures corresponding to the foregoing accompanying drawings have respective focuses. For a part that is not described in detail in a procedure, refer to related descriptions of other procedures.

All or some of the foregoing embodiments may be implemented by software, hardware, firmware, or any combination thereof. When software is used to implement the embodiments, all or some of the embodiments may be implemented in a form of a computer program product. The computer program product that provides a program development platform includes one or more computer instructions. When these computer program instructions are loaded and executed on the compute device, all or some of functions of the cloud service providing method provided in embodiments of this application are implemented.

The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital cloud tenant line) or wireless (for example, infrared, radio, or microwave) manner. The computer-readable storage medium stores the computer program instructions that provide the program development platform.

An embodiment of this application further provides a compute device cluster. The compute device cluster includes at least one compute device. The compute device may be a server, for example, a central server, an edge server, or a local server in a local data center. In some embodiments, the compute device may alternatively be a terminal device, for example, a desktop computer, a notebook computer, or a smartphone.

Optionally, for a structure of the at least one compute device included in the compute device cluster, refer to the compute device 2100 shown in FIG. 21. A memory 2102 in one or more compute devices 2100 in the compute device cluster may store same instructions for performing the cloud service providing method.

In some possible implementations, the memory 2102 in the one or more compute devices 2100 in the compute device cluster may store a part of instructions for performing the cloud service providing method. In other words, a combination of the one or more compute devices 2100 may jointly execute the instructions for performing the foregoing cloud service providing method.

It should be noted that memories 2102 in different compute devices 2100 in the compute device cluster may store different instructions, respectively used to perform a part of functions of the cloud service providing apparatus. In other words, instructions stored in the memories 2102 in the different compute devices 2100 may implement functions of one or more modules in the interaction module 2001 and the processing module 2002.

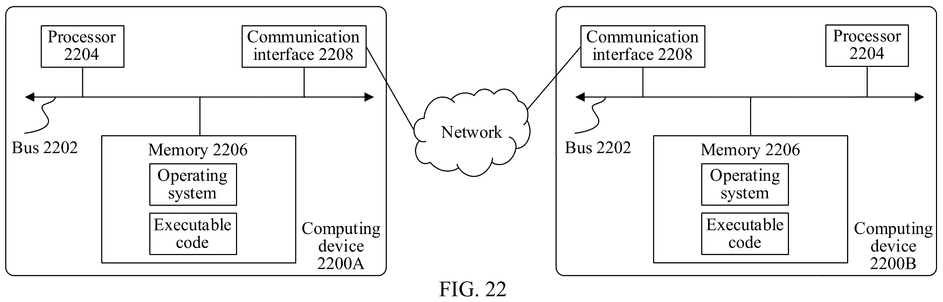

In some possible implementations, the one or more compute devices in the compute device cluster may be connected over a network. The network may be a wide area network, a local area network, or the like. FIG. 22 shows a possible implementation. As shown in FIG. 22, two compute devices 2200A and 2200B are connected over a network. Specifically, each compute device is connected to the network through a communication interface of the compute device. In this possible implementation, the compute devices 2200A and 2200B each include a bus 2202, a processor 2204, a memory 2206, and a communication interface 2208. The memory 2206 in the compute device 2200A stores instructions for performing a function of the interaction module 2001. In addition, the memory 2206 in the compute device 2200B stores instructions for performing a function of the processing module 2002.

It should be understood that a function of the compute device 2200A shown in FIG. 22 may alternatively be completed by a plurality of compute devices 2200. Similarly, a function of the compute device 2200B may alternatively be completed by a plurality of compute devices 2200. In addition, a deployment manner of the modules configured to implement the cloud service providing method in the compute device may alternatively be adjusted based on an application requirement.

An embodiment of this application further provides a computer-readable storage medium. The computer-readable storage medium is a non-volatile computer-readable storage medium. The computer-readable storage medium includes program instructions. When the program instructions are run on a compute device, the compute device is caused to implement the cloud service providing method provided in embodiments of this application.

An embodiment of this application further provides a computer program product including instructions. When the computer program product runs on a computer, the computer is caused to implement the cloud service providing method provided in embodiments of this application.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

It should be noted that information (including but not limited to cloud tenant equipment information, cloud tenant personal information of a user, and the like), data (including but not limited to data used for analysis, stored data, displayed data, and the like), and signals in this application are used under authorization by the cloud tenant or full authorization by all parties, and collection, use, and processing of related data need to conform to related laws, regulations, and standards of related countries and regions. For example, original data, executable code, and the like in this application are obtained under full authorization.

In embodiments of this application, the terms "first", "second", and "third" are merely used for description, but cannot be understood as an indication or implication of relative importance. The term "at least one" means one or more, and the term "a plurality of" means two or more, unless otherwise expressly limited.

The term "and/or" in this application describes only an association relationship for describing associated objects and indicates that three relationships may exist. For example, A and/or B may represent the following three cases: Only A exists, both A and B exist, and only B exists. In addition, the character "/" in this specification generally indicates an "or" relationship between the associated objects.

The foregoing descriptions are merely optional embodiments of this application, but are not intended to limit this application. Any modification, equivalent replacement, improvement, or the like made within the concept and principle of this application shall fall within the protection scope of this application.

## Claims

1. A cloud service providing method, wherein the method is applied to a cloud platform, and the method comprises:
providing, by the cloud platform, a network configuration interface for a user, wherein the network configuration interface prompts the user to enter network feature information, and the network feature information indicates a cloud service network needed for implementing a target cloud service;
providing, by the cloud platform, a network association interface for the user, wherein the network association interface prompts the user to enter association information, the association information indicates a plurality of service nodes associated with the cloud service network, the service node is used to deploy an application of the user, the application is used to implement the target cloud service, and the plurality of service nodes are deployed based on a resource in one or more resource deployment regions; and
establishing, by the cloud platform, an association relationship between the plurality of service nodes based on the network feature information and the association information, to obtain the cloud service network.

2. The method according to claim 1, wherein the plurality of service nodes meet one or both of the following:
the plurality of service nodes are deployed based on cloud resources in different cloud resource deployment regions on the cloud platform; and
the plurality of service nodes are deployed based on at least two of a public network resource, a cloud resource in a cloud resource deployment region, and a self-owned resource of the user.

3. The method according to claim 1 or 2, wherein the service node is deployed based on a resource in one or more resource deployment regions.

4. The method according to claim 3, wherein the service node meets one or both of the following:
the service node is deployed based on cloud resources in different cloud resource deployment regions on the cloud platform; and
the service node is deployed based on at least two of a public network resource, a cloud resource in the cloud resource deployment region, and a self-owned resource of the user.

5. The method according to any one of claims 1 to 4, wherein different listening protocols are used for the plurality of service nodes.

6. The method according to any one of claims 1 to 5, wherein different network protocols are used for a plurality of first resource sets used to deploy the service node.

7. The method according to any one of claims 1 to 6, wherein different network protocols are used for a plurality of first resource sets used to deploy the plurality of service nodes.

8. The method according to any one of claims 1 to 7, wherein before establishing, by the cloud platform, the association relationship between the plurality of service nodes based on the network feature information and the association information, to obtain the cloud service network, the method further comprises:
providing, by the cloud platform, a service configuration interface for the user, wherein the service configuration interface prompts the user to enter service feature information, the service feature information indicates all first resource sets needed for deploying the service node, and all resources in any first resource set are deployed in a same resource deployment region; and
deploying, by the cloud platform, the service node by using all the first resource sets.

9. The method according to any one of claims 1 to 8, wherein the service feature information or the network feature information further indicates that the service node is reused as a client, and the service feature information indicates all the first resource sets needed for deploying the service node; and the method further comprises:
deploying, by the cloud platform, the client by using all the first resource sets, and associating the client with the cloud service network.

10. The method according to claim 9, wherein different network protocols are used for a resource set used to deploy the client and a resource set used to deploy the service node.

11. The method according to claim 9 or 10, wherein the client is associated with a plurality of cloud service networks, and the plurality of cloud service networks are used to implement different cloud services.

12. The method according to any one of claims 1 to 11, wherein the plurality of service nodes are respectively deployed by a plurality of users.

13. The method according to any one of claims 1 to 12, wherein the cloud service network and the plurality of service nodes are separately deployed by a plurality of users.

14. The method according to claim 1 or 13, wherein the service node is associated with a plurality of cloud service networks, and the plurality of cloud service networks are used to implement different cloud services.

15. The method according to any one of claims 1 to 14, wherein the cloud service network comprises a transit network, the transit network is used to associate different service nodes, and the transit network is used to translate addresses of the plurality of service nodes.

16. A cloud service providing apparatus, wherein the apparatus is used in a cloud platform, and the apparatus comprises:
an interaction module, configured to provide a network configuration interface for a user, wherein the network configuration interface prompts the user to enter network feature information, and the network feature information indicates a cloud service network needed for implementing a target cloud service, wherein
the interaction module is further configured to provide a network association interface for the user, wherein the network association interface prompts the user to enter association information, the association information indicates a plurality of service nodes associated with the cloud service network, the service node is used to deploy an application of the user, the application is used to implement the target cloud service, and the plurality of service nodes are deployed based on a resource in one or more resource deployment regions; and
a processing module, configured to establish an association relationship between the plurality of service nodes based on the network feature information and the association information, to obtain the cloud service network.

17. The apparatus according to claim 16, wherein
the interaction module is further configured to provide a service configuration interface for the user, wherein the service configuration interface prompts the user to enter service feature information, the service feature information indicates all first resource sets needed for deploying the service node, and all resources in any first resource set are deployed in a same resource deployment region; and
deploy the service node by using all the first resource sets.

18. The apparatus according to claim 16 or 17, wherein the service feature information or the network feature information further indicates that the service node is reused as a client, and the service feature information indicates all the first resource sets needed for deploying the service node; and
the processing module is further configured to deploy the client by using all the first resource sets, and associate the client with the cloud service network.

19. A compute device cluster, comprising a plurality of compute devices, wherein the plurality of compute devices comprise a plurality of processors and a plurality of memories, the plurality of memories store program instructions, and the plurality of processors run the program instructions, to cause the compute device cluster to perform the method according to any one of claims 1 to 15.

20. A computer-readable storage medium, comprising program instructions, wherein when the program instructions are run on a compute device, the compute device is caused to perform the method according to any one of claims 1 to 15.

21. A computer program product comprising instructions, wherein when the computer program product runs on a computer, the computer is caused to perform the method according to any one of claims 1 to 15.
